Europäisches Patentamt

European Patent Office

Office européen des brevets

(19)

(11) Numéro de publication : **0 022 004**
**B1**

(12)

# FASCICULE DE BREVET EUROPÉEN

(45) Date de publication du fascicule du brevet :
07.05.86

(51) Int. Cl.⁴ : **G 06 F 15/40, G 06 F 7/28**

(21) Numéro de dépôt : **80400912.4**

(22) Date de dépôt : **19.06.80**

(54) **Procédé pour la commande de rapprochement à effectuer entre des entités logiques de référence et des entités logiques issues d'un fichier.**

(30) Priorité : **19.06.79 FR 7915701**

(43) Date de publication de la demande :
**07.01.81 Bulletin 81/01**

(45) Mention de la délivrance du brevet :
**07.05.86 Bulletin 86/19**

(84) Etats contractants désignés :
**AT BE CH DE GB IT LI LU NL SE**

(56) Documents cités :
FR-A- 2 289 962
**FOURTH INTERNATIONAL CONFERENCE ON VERY LARGE DATA BASES, 13-15 septembre 1978 I.E.E.E. Berlin New York US LEILICH: "A search processor for data base management systems", pages 280-287 Informatik-Bericht Nr 7801, Technische Universität Braunschweig 3300 Braunschweig (DE) LEILICH: The Search Processor: A Special Device for Data Base Management Systems**
**Le dossier contient des informations techniques présentées postérieurement au dépôt de la demande et ne figurant pas dans le présent fascicule.**

(73) Titulaire : **Vidalin, Jacques**
**12, rue du Palais des Guilhem**
**F-3400 Montpellier (FR)**

(72) Inventeur : **Vidalin, Jacques**
**12, rue du Palais des Guilhem**
**F-3400 Montpellier (FR)**

(74) Mandataire : **Joly, Jean-Jacques et al**
**CABINET BEAU DE LOMENIE 55, rue d'Amsterdam**
**F-75008 Paris (FR)**

EP 0 022 004 B1

Jouve, 18, rue St-Denis, 75001 Paris, France

## Description

La présente invention concerne un procédé et un dispositif pour la commande de rapprochement à effectuer entre des entités logiques de référence et des entités logiques issues d'un fichier.

Le traitement des données d'un fichier nécessite un repérage de l'information. Lorsque celle-ci a une structure complexe, le repérage par des moyens externes au fichier est difficile et onéreux surtout si le fichier est de grande capacité et est sujet à de fréquentes mises à jour.

On peut se passer de repères externes en introduisant dans le fichier des éléments de localisation tels que des entités logiques spéciales, ou labels, et des caractères spéciaux, ou séparateurs. Le traitement du fichier peut alors être effectué au moyen d'un procédé du type indiqué plus haut et tel que décrit dans le brevet français n° 2 293 741 et son certificat d'addition n° 2 330 075.

Selon ce procédé, on range des entités logiques de même type dans des colonnes d'une table de référence, on compare selon une première fonction les éléments d'information de chaque entité logique à rapprocher en parallèle et successivement avec les éléments d'information de même rang des entités logiques de référence contenues dans les lignes successives de la table de référence, et on combine les résultats successifs des comparaisons pour fournir le résultat du rapprochement et décider des informations à stocker. Différents sous-ensembles de rapprochement peuvent être utilisés pour repérer les séparateurs, labels et entités logiques en vue de localiser dans le fichier les informations à reconnaître et éventuellement à stocker.

Toutefois, lorsque la structure de l'information contenue dans le fichier est complexe, on doit avoir recours à un nombre élevé de labels et de séparateurs, ce qui alourdit le système de traitement du fichier.

Un procédé de rapprochement est également décrit par le document FR-A-2 289 962. Le procédé est mis en œuvre par un dispositif que commande une horloge interne. Il n'est alors pas possible de synchroniser l'exécution des traitements de comparaison sur le défilement des informations issues de la source. De plus, la réalisation de ce procédé suppose que des informations de commande soient nécessairement présentes dans le fichier. Ces informations de commande sont strictement localisées selon un certain format, de sorte que les comparaisons ne peuvent être effectuées au vol sur des informations provenant d'une source avec une structure quelconque.

L'on connaît encore du compte rendu n° 7801 de LEILICH e. a. de janvier 1978 (The Search Processor : A Special Device for Data Base Management Systems, Technische Universität Braunschweig) un procédé du type selon lequel :

(a) on enregistre des entités logiques de référence dans une table de référence en rangeant verticalement, dans des zones horizontales différentes de la table, des entités logiques de types différents,

(b) on enregistre dans une mémoire de commande des premières informations de commande relatives notamment au rapprochement à effectuer entre des entités logiques de même type du fichier et des entités logiques de référence situées dans la table de référence, et des secondes informations de commande relatives notamment aux opérations à effectuer à la fin du ou des rapprochements réalisés avec une ou plusieurs entités logiques du fichier,

(c) on fait défiler le fichier et on exécute au vol, sans stockage intermédiaire, les opérations correspondant aux informations de commande, notamment en comparant selon une première fonction chaque entité logique à rapprocher en parallèle avec des entités logiques de référence contenues dans la table de référence, lesdites opérations étant exécutées dans le temps pendant lequel les éléments d'information sont reçus au cours du défilement du fichier.

Selon le procédé divulgué par LEILICH e. a., la synchronisation du traitement est assurée en incluant arbitrairement des séparateurs dans le fichier puisque les informations de commande proprement dites sont enregistrées dans la même table que les informations de référence et que doit se faire simultanément l'exploitation à la fois des informations issues du fichier et de celles qui sont enregistrées dans la table. Il en résulte une conséquence contraignante, à savoir que le format de l'instruction de commande ne peut être que celui de l'information ou octet reçu de la source.

Aussi les possibilités de sauts, de boucles et de reprise dans la mémoire de commande et dans la table de référence sont réduites pour le procédé de LEILICH.

L'invention a pour but de fournir un procédé permettant la réalisation d'un rapprochement à des informations contenues dans des structures quelconques de fichier tout en travaillant au rythme des informations délivrées par la source, sans repérage externe et tout en commandant l'exécution simultanée des fonctions élémentaires liées aux rapprochements et aux stockages à effectuer, sans interruption du déroulement du fichier. Ces fonctions élémentaires à exécuter simultanément sont relatives à la localisation, au traitement, au transfert des informations issues de la source, aux enchaînements séquentiels des ensembles d'opérations simultanées et aux tests concernant les résultats obtenus sur les précédents rapprochements. Les informations soumises au procédé de rapprochement pourront être de longueur fixe ou variable, le procédé de commande permettant alors, en particulier, une réduction du nombre de labels et séparateurs nécessaires à la localisation des données à exploiter. L'invention a aussi pour but de fournir un procédé avec lequel il est possible d'admettre toutes les formes de bouclage que peut demander le traitement d'une structure conforme à l'invention.

**0 022 004**

Ce but est atteint par un procédé selon la revendication 1 et consistant en ce que :

(A) on enregistre des entités logiques de référence dans une table de référence à plusieurs colonnes verticales et plusieurs zones horizontales en rangeant des entités logiques de types différents verticalement, dans des zones horizontales différentes de la table de référence, dans l'ordre dans lequel les suites formées chacune d'entités logiques de même type à rapprocher se présentent, non nécessairement de façon consécutive, dans le fichier, chaque zone horizontale contenant des entités logiques de référence de même type rangées verticalement par colonnes chacune formée par les éléments d'information successifs constitutifs d'une entité logique de référence.

(B) on enregistre des informations de commande dans une mémoire de commande distincte de la table de référence et, contenant, par ligne :

— des premières informations de commande qui comprennent, d'une part, des informations de commande relatives au rapprochement à effectuer entre des entités logiques de même type du fichier et des entités logiques situées dans une horizontale de la table de référence correspondant à la ligne de la mémoire dans laquelle ces informations de commande de rapprochement sont enregistrées et, d'autre part, des informations de commande relatives au stockage d'entités logiques issues du fichier,

— des secondes informations de commande qui comprennent des informations de commande d'opérations à effectuer à la fin du ou des rapprochements et/ou des informations de stockage d'une ou plusieurs entités logiques du fichier, lesdites informations de commande d'opérations comportant des instructions de bouclage éventuelles pour commander les enchaı←nements dans la mémoire de commande et dans la table de référence.

— des troisièmes informations de structure destinées à permettre la reconnaissance de la fin des entités logiques sur lesquelles doit être effectué le rapprochement et/ou le stockage commandé par des informations de commande de la ligne, et,

(C) on enregistre, dans une mémoire d'enchaînements, par ligne qui correspond à une ligne de la mémoire de commande, d'une part, des informations relatives au nombre de boucles à effectuer pour les traitements de la ligne correspondante de la mémoire de commande et, d'autre part, des informations relatives aux adresses de reprise dans la table de référence et dans la mémoire de commande lorsque le nombre de boucles a été effectué, et

(D) on fait défiler le fichier et on exécute au vol, sans stockage intermédiaire, les opérations correspondant aux premières informations de commande d'une ligne de la mémoire de commande, notamment en comparant selon une première fonction chaque entité logique à rapprocher en parallèle avec des entités logiques de référence contenues dans une zone horizontale de la table de référence, puis, après reconnaissance de la fin des entités logiques suivant les troisièmes informations de structure on exécute les opérations correspondant aux secondes informations de commande de cette ligne, ces opérations étant effectuées dans le temps pendant lequel les éléments d'information sont reçus au cours du défilement du fichier,

— les passages d'une ligne à la suivante dans une zone horizontale de la table de référence étant effectués lorsque la ligne correspondante de la mémoire de commande contient une information de commande de rapprochement à effectuer avec la ou les entités logiques de référence contenues dans cette zone horizontale, et

— le cas échéant, en réponse aux instructions de bouclage contenues dans une ligne de la mémoire de commande et aux informations enregistrées dans une ligne correspondante de la mémoire d'enchaînements, on compte le nombre de traitements effectués correspondant à cette ligne de la mémoire de commande et, lorsque le nombre de traitements effectués est égal au nombre de boucles enregistré, on exécute les sauts dans la table de référence et dans la mémoire de commande correspondant aux adresses de reprise enregistrées dans la mémoire d'enchaînements et on passe à la ligne suivante de cette mémoire.

Il convient de noter ici que par informations de commande relatives à un rapprochement, informations de commande de stockage et informations de commande d'opérations, on entend aussi bien la présence d'instructions pour effectuer un rapprochement, un stockage ou une opération, que l'absence de telles instructions.

L'enchaînement entre des lignes de la mémoire de commande auxquelles correspondent des zones horizontales différentes de la table de référence permet de réaliser des enchaînements sur des entités logiques de référence de types différents. Il en résulte une grande souplesse de traitement du fichier et la possibilité de réduire le nombre de labels et de caractères spéciaux spécifiques à ce fichier.

Un autre avantage du procédé conforme à l'invention réside dans le fait qu'il peut être mis en œuvre sur des fichiers de structure quelconque, c'est-à-dire des fichiers qui contiennent des informations de format fixe ou variable, en caractères de nature indifférente, et n'ayant pas à être modifiées pour contenir des instructions.

Les informations de commande enregistrées dans la mémoire de commande peuvent comporter des informations de commande de localisation pour repérer dans le fichier un point origine à partir duquel on effectue des opérations de rapprochement et/ou de stockage. On peut avoir recours à une localisation en préalable à un traitement d'une partie du fichier, ou, en cours de traitement pour franchir une zone du fichier contenant des informations sur lesquelles aucun traitement n'est à effectuer.

L'opération de localisation peut être réalisée de plusieurs façons.

3

**0. 022 004**

On enregistre dans au moins une ligne de la mémoire de commande des troisièmes informations de structure sous forme de caractères spéciaux utilisés comme repères dans le fichier.

Comme repères, on pourra utiliser par exemple, outre des caractères spéciaux marquant la fin d'entités logiques de longueur variable, des caractères spéciaux marquant la fin d'articles ou sous-articles du fichier.

On peut aussi enregistrer dans au moins une ligne de la mémoire de commande des informations de commande relatives aux boucles à effectuer pour les traitements correspondant à cette ligne de la mémoire de commande et l'on enregistre dans une mémoire, d'une part, des informations relatives au nombre de boucles à effectuer pour lesdits traitements et, d'autre part, des informations relatives au saut à effectuer dans la mémoire de commande et éventuellement dans la table de référence lorsque ledit nombre de boucles a été effectué. Au cours du défilement du fichier, on compte le nombre desdits traitements effectués correspondant à ladite ligne de la mémoire de commande et on exécute les opérations correspondant auxdites informations relatives au saut lorsque le nombre de traitements effectués est égal au nombre de boucles enregistré.

Comme indiqué plus haut, le procédé conforme à l'invention peut être mis en œuvre que les entités logiques du fichier aient un format fixe ou non totalement ou en partie.

L'enregistrement d'informations permettant de reconnaître la fin de chaque entité logique sur laquelle doit être effectuée un rapprochement et/ou un stockage permet, par cette reconnaissance, de commander, en conséquence, l'initialisation ou la fin d'une opération de rapprochement et/ou de stockage.

Parmi les opérations de commande pouvant être enregistrées dans une ligne de la mémoire, on peut distinguer entre celles concernant les opérations à caractère itératif et les opérations à effectuer en fin de traitement.

Les informations de commande à caractère itératif comprennent les informations de commande relatives à un rapprochement. Ces dernières caractérisent les fonctions de comparaison itérative des éléments d'information de même rang des entités logiques issues du fichier et des entités logiques de référence, et les fonctions de combinaison des résultats des différentes comparaisons. A titre indicatif, les fonctions de comparaison peuvent être : « égal », « plus grand », « plus petit » ou leurs opposées : « différent », « plus petit ou égal », « plus grand ou égal ». Les fonctions de combinaison sont des combinaisons booléennes portant sur des résultats obtenus séquentiellement entre des suites d'entités logiques et simultanément entre entités logiques de même type, donc appartenant à une même suite.

Les informations de commande à caractère itératif comprennent aussi les informations de commande relatives au stockage, lesquelles consistent généralement en la présence ou l'absence d'instructions de stockage d'informations issues du fichier.

Les secondes informations de commande peuvent être des opérations inconditionnelles, c'est-à-dire nécessairement effectuées, ou conditionnelles, c'est-à-dire effectuées uniquement si une condition particulière est remplie, par exemple un résultat positif ou négatif à la fin des rapprochements effectués pour un ensemble d'entités logiques correspondant à un article du fichier.

Ces opérations conditionnelles ou inconditionnelles peuvent être liées à des opérations de stockage résultant du transfert d'informations du fichier vers un périphérique, une mémoire auxiliaire, une sortie ou tout autre organe de stockage d'informations. Elles correspondent alors à l'effacement ou à la conservation d'informations stockées.

Parmi les secondes informations de commande, on trouve en outre des informations de commande de saut pour effectuer des enchaînements dans la mémoire de commande ainsi que dans la table de référence, un enchaînement d'une ligne à une autre dans la mémoire de commande ne correspondant pas nécessairement à un enchaînement d'une zone horizontale à une autre dans la table de référence.

Les informations de commande de saut peuvent résulter de la combinaison de plusieurs informations de commande. Il en est ainsi notamment lorsqu'une opération conditionnelle est commandée par une information spécifique laquelle résulte elle-même d'autres informations. Ces autres informations peuvent par exemple être relatives pour un résultat global, à la combinaison booléenne recherchée entre les différents résultats élémentaires obtenus, soit simultanément, soit consécutivement. De même, on peut faire qu'une opération de commande de saut dans la mémoire de commande peut commander un saut dans la table de référence, mais que toute incrémentation de la table des entités logiques de référence soit inhibée pour un code d'opération nul (NOP) correspondant à la nouvelle ligne de la mémoire de commande, c'est-à-dire à défaut de rapprochement à effectuer sur les entités logiques de la zone horizontale de la table de référence correspondant à la ligne de la mémoire de commande pour laquelle est ordonné le saut.

D'autres secondes informations de commande d'opérations peuvent être enregistrées dans la mémoire de commande. On peut citer les opérations d'enchaînement sur des périphériques ou des mémoires auxiliaires et, en particulier en fin des traitements, les opérations de tests et de comparaisons avec les résultats de référence.

L'enregistrement dans les lignes de la mémoire d'enchaînement, d'une part, des informations relatives au nombre de boucles à effectuer pour les traitements de lignes correspondantes de la mémoire de commande, ainsi que, d'autre part, des adresses de reprises dans la table de référence et la mémoire de commande, permet de réaliser les bouclages désirés.

4

**0 022 004**

L'invention a aussi pour but de fournir un dispositif apte à mettre en œuvre le procédé conforme à l'invention.

Ce but est atteint par un dispositif selon la revendication 5 et comportant :

(A) une table de référence partagée en plusieurs colonnes verticales et en plusieurs zones horizontales dans lesquelles des entités logiques de référence de types différents sont rangées verticalement dans l'ordre dans lequel les suites formées chacune d'entités logiques de même type à rapprocher se présentent, non nécessairement de façon consécutive, dans le fichier, chaque zone horizontale contenant des entités logiques de référence de même type rangées verticalement par colonnes chacune formée par les éléments d'information successifs constitutifs d'une entité logique de référence ;

(B) des opérateurs ayant chacun une entrée recevant les entités logiques du fichier et une autre entrée pouvant recevoir les éléments d'information contenus dans une colonne ;

(C) au moins une mémoire-tampon pouvant recevoir des informations issues du ficher ; et

(D) une unité de commande du traitement à effectuer sur les éléments d'information du fichier, l'unité de commande comprenant :

— une mémoire de commande distincte de la table de référence et contenant, par ligne : des premières informations de commande qui comprennent, d'une part, des informations de commande relatives au rapprochement à effectuer entre des entités logiques de même type du fichier et des entités logiques situées dans une zone horizontale de la table de référence correspondant à la ligne de la mémoire dans laquelle ces informations de commande de rapprochement sont enregistrées et, d'autre part, des informations de commande relatives au stockage d'entités logiques issues du fichier ; des secondes informations de commande qui comprennent des informations de commande d'opérations à effectuer à la fin du ou des rapprochements et/ou des informations de stockage d'une ou plusieurs entités logiques du fichier, lesdites informations de commande d'opérations comportant des instructions de bouclage éventuelles pour commander les enchaînements dans la mémoire de commande et dans la table de référence ; et des troisièmes informations de structure destinées à permettre la reconnaissance de la fin des entités logiques sur lesquelles doit être effectué le rapprochement et/ou le stockage commandé par des informations de commande de la ligne ;

— une mémoire d'enchaînements pour l'enregistrement, par ligne qui correspond à une ligne de la mémoire de commande, d'informations relatives au nombre de boucles à effectuer pour les traitements de la ligne correspondante de la mémoire de commande, et d'informations relatives aux adresses de reprise dans la table de référence et dans la mémoire de commande lorsque le nombre de boucles a été effectué ;

— un compteur pour compter les traitements effectués ; et

— un dispositif de comparaison pour comparer le contenu dudit compteur avec le nombre de boucles à effectuer, et

— un circuit de microcommande qui est relié à la mémoire de commande et au dispositif de comparaison et qui reçoit les informations issues du fichier pour, au cours et sans interruption du défilement du fichier, délivrer des signaux de commande d'exécution des opérations correspondant aux premières informations de commande d'une ligne de la mémoire de commande, notamment la comparaison selon une première fonction de chaque entité logique à rapprocher, en parallèle avec des entités logiques de référence contenues dans une zone horizontale de la table de référence, puis, après reconnaissance de la fin des entités logiques suivant les troisièmes informations de structure, l'exécution des opérations correspondant aux secondes informations de commande de cette ligne, les passages d'une ligne à la suivante dans une zone horizontale de la table de référence étant effectués lorsque la ligne correspondante de la mémoire de commande contient une information de commande de rapprochement à effectuer avec la ou les entités logiques de référence contenues dans cette zone horizontale et, le cas échéant, en réponse aux instructions de bouclage contenues dans une ligne de la mémoire de commande et aux informations enregistrées dans une ligne correspondante de la mémoire d'enchaînements, le comptage du nombre de traitements effectués correspondant à cette ligne de la mémoire de commande et, lorsque le nombre de traitements effectués est égal au nombre de boucles enregistré, l'exécution de sauts dans la table de référence et dans la mémoire de commande correspondant aux adresses de reprise enregistrées dans la mémoire d'enchaînements et passage à la ligne suivante de cette mémoire d'enchaînements.

La mémoire de commande, ainsi que la table de référence, peuvent être réalisées sous forme de mémoires adressables ou de mémoires piles.

Les particularités et avantages du procédé et du dispositif de commande de rapprochement conformes à l'invention ressortiront à la lecture de la description faite ci-après en référence aux figures des dessins joints qui illustrent :

figure 1   un schéma très général d'un dispositif de commande conforme à l'invention ;

figure 2   un schéma plus détaillé d'un opérateur de comparaison du dispositif illustré par la figure 1 ;

figures 3 à 7   des schémas plus détaillés de parties de l'unité de commande du dispositif représenté par la figure 1 ;

figures 8 à 10   des schémas plus détaillés d'opérateurs de combinaison du dispositif illustré par la figure 1 ; et

5

figure 11 un schéma plus détaillé du dispositif de comptage du dispositif 14 illustré par la figure 1.

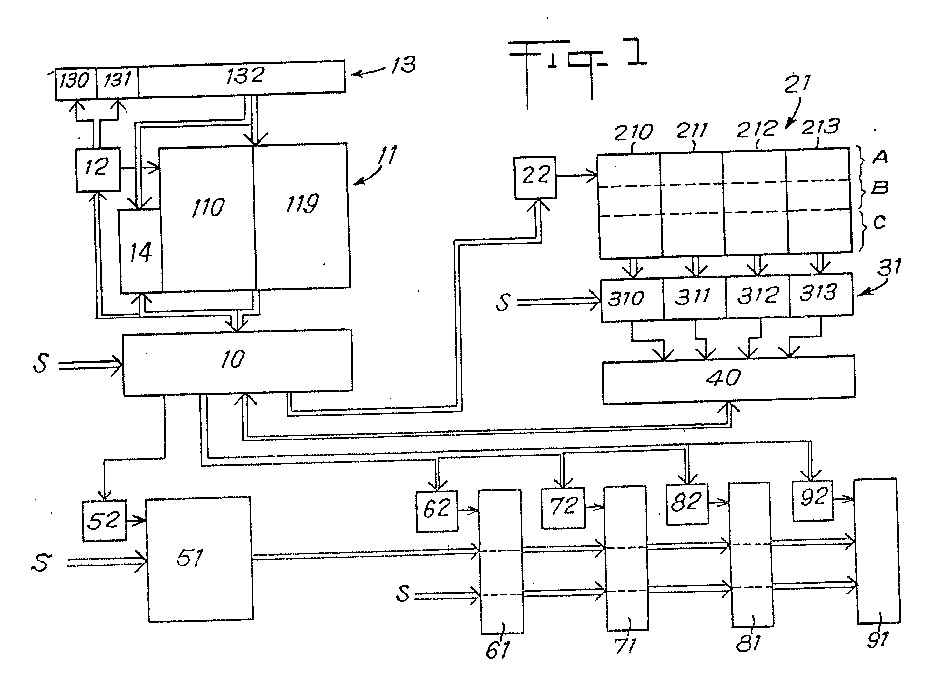

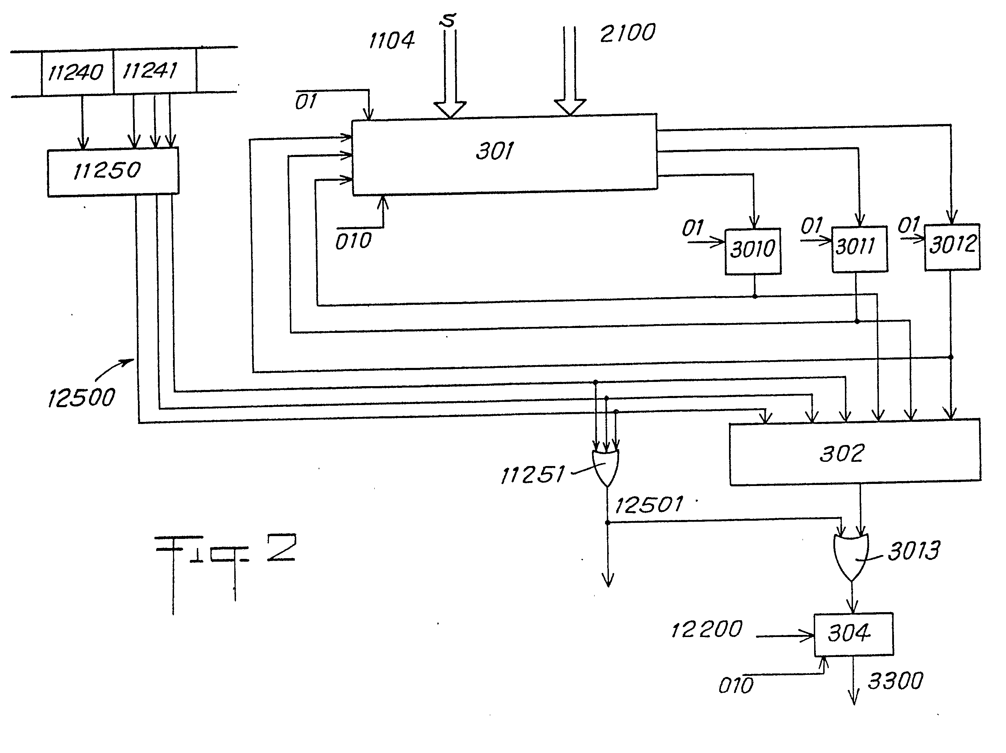

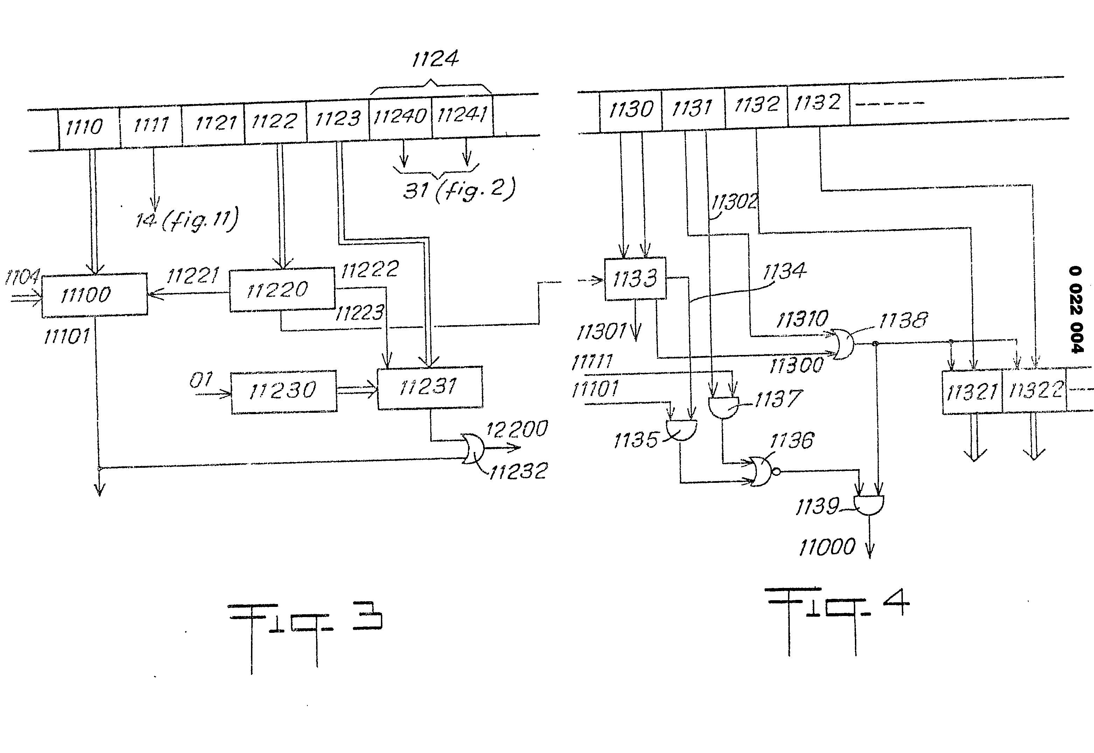

Sur la figure 1, on a représenté le schéma d'un mode particulier de réalisation d'un dispositif de commande conforme à l'invention.

Ce dispositif comporte un tableau, ou table de référence 21, constitué, dans cet exemple, par une mémoire adressable. La table 21 est ici décrite et illustrée comme étant partagée en plusieurs colonnes 210, 211, 212, 213 et plusieurs zones horizontales A, B, C variables et non nécessairement de longueurs égales ; ceci pour la clarté de l'exposé. En effet, sur le plan strictement matériel, l'organisation de la mémoire pourra être différente, pour autant que l'on retrouve le même partage entre plusieurs éléments de mémoires initialisables au moyen d'un même compteur 22. Par ailleurs, le nombre de colonnes et le nombre de zones horizontales pourront être des nombres quelconques.

Un ensemble 31 d'opérateurs 310, 311, 312, 313 sont associés aux différentes colonnes de la table 21 et sont reliés à l'opérateur de combinaison des résultats 40. Ces opérateurs reçoivent les éléments d'information issus d'un fichier S et sur lesquels doit être effectué un ou plusieurs processus de rapprochement.

Ce ou ces rapprochements sont réalisés sous la commande d'une unité de commande comprenant une mémoire de commande 11, un circuit de microcommande 10 recevant les informations et instructions contenues dans la mémoire 11, un compteur adressable 12 régissant l'accès à la mémoire 11, un registre 13 de chargement de la mémoire 11 et un dispositif de localisation 14 de l'information par comptage des entités logiques et par comptage ou identification des séparateurs.

Le registre de chargement 13 comprend des premières zones 130, 131 reliées au compteur 12 et comprenant des indications relatives aux adresses auxquelles les informations ou instructions contenues dans une seconde zone 132 doivent être chargées dans la mémoire 11 ou le dispositif de localisation 14.

La mémoire 11 est partagée en lignes horizontales, chaque zone horizontale du tableau correspondant à une ligne horizontale de la mémoire. Comme indiqué ci-dessus à propos de la table 21, le partage de la mémoire 11 n'est défini ici comme étant réalisé en lignes horizontales que pour la clarté de l'exposé.

La mémoire 11 est partagée en outre en zones verticales 110, 119 dans lesquelles sont respectivement enregistrées des instructions correspondant à des opérations à caractère itératif effectuées pendant le traitement de chaque ligne de ladite mémoire et des instructions correspondant à des opérations terminales effectuées en fin de traitement. Ces différentes zones de la mémoire seront définies plus en détail ci-après.

Une mémoire auxiliaire adressable 51 et son compteur adressable associé 52 sont prévus pour stocker de façon conditionnelle ou non l'information issue de fichier, en fonction de signaux de commande fournis par le circuit 10.

Enfin, des compteurs adressables 62, 72, 82, 92 ... permettent le transfert d'informations issues du fichier sur des périphériques, sorties, ou toute autre mémoire 61, 71, 81, 91 en fonction de commandes fournies par le circuit 10.

Avant de décrire en détail le fonctionnement du dispositif de commande, on va rappeler en quoi consiste le processus de rapprochement itératif et simultané tel qu'il est décrit dans le brevet français n° 2 293 741 et son certificat d'addition n° 2 330 075.

Un fichier sur lequel un rapprochement est à effectuer comporte des données, appelées entités logiques, constituées d'éléments d'information, par exemple des octets. Les entités logiques sont en longueur fixe ou variable. Dans le second cas, il est nécessaire d'adjoindre à chaque entité logique un caractère spécial indiquant sa fin. Les entités logiques sont regroupées en séquences identifiées chacune par un label (ou étiquette, ou titre, ...) particulier appelé entité logique spéciale. Les séquences peuvent être de longueur fixe ou variable, c'est-à-dire comporter un nombre fixe ou non d'entités logiques. Dans le second cas, on adjoint à chaque séquence un caractère spécial indiquant sa fin.

Un rapprochement itératif et simultané consiste à reconnaître une relation entre chaque entité logique spéciale ou non issue de la source et simultanément plusieurs entités logiques de référence. La relation est, par exemple, une relation d'égalité, d'inégalité, d'encadrement...

A cet effet, on compare chaque entité logique issue de la source, élément d'information par élément d'information, avec les entités logiques de référence. Ces résultats des comparaisons sont combinés pour fournir le résultat de rapprochement.

Avec le dispositif conforme à l'invention, on charge dans la table 21, dans une même colonne, une suite d'entités logiques de types différents se présentant dans le même ordre, mais non nécessairement consécutivement, dans le fichier. Dans une même zone horizontale de la table 21, on range verticalement les entités logiques de même type sur lesquelles un rapprochement est à effectuer simultanément en parallèle, la longueur de chaque zone correspondant soit à la longueur maxima des entités logiques de référence, soit à la plus longue des entités logiques appartenant à cette zone. On entend par entités logiques de même type des entités logiques appartenant à un ensemble ou sous-ensemble de même signification.

Par entités logiques de types différents, on entend ici, par exemple, les labels et les données. Les labels pourront être de niveaux différents, un label identifiant une séquence du fichier contenant plusieurs sous-articles identifiés chacun par un label de niveau inférieur. Les labels de différents niveaux sont considérés comme des entités logiques de types différents.

On va maintenant décrire de façon détaillée des modes de réalisation particuliers de différentes parties du procédé et du dispositif conformes à l'invention, à savoir successivement : le chargement dans la mémoire de commande 11 et le dispositif de localisation 14 des instructions nécessaires à la réalisation des localisations, rapprochements et transferts à effectuer sur les informations d'un fichier ; la structure et le fonctionnement d'un opérateur de rapprochement ; la commande d'opérations du premier niveau à effectuer en fin de chaque entité logique ; la commande d'opérations du second niveau à effectuer en fin de chaque sous-article ; la commande de transferts ; la commande des enchaînements sur la table de commande ; la commande des enchaînements à effectuer sur la table de référence ; la commande des enchaînements à effectuer sur un périphérique ; les commandes et circuits relatifs aux comparaisons avec les résultats de référence ; et les commandes relatives aux tests. Différents exemples de mise en œuvre de l'invention seront ensuite décrits.

Chargement des instructions

Dans la mémoire de commande 11, sont chargées les instructions nécessaires à la réalisation des rapprochements ainsi que des transferts à effectuer sur les informations issues du fichier.

Chaque ligne de la mémoire de commande correspond à une instruction de localisation des informations à traiter et/ou de rapprochements à effectuer entre les entités logiques issues de la source et la ou les entités logiques de référence et/ou de stockage des éléments d'informations reçus de la source. Lorsque la localisation résulte d'un rapprochement à effectuer, par exemple, sur une entité logique spéciale de référence ou label, l'instruction de localisation est une instruction de rapprochement.

Chaque ligne de la mémoire de commande correspondant à une zone horizontale de la table de référence est chargée comme suit.

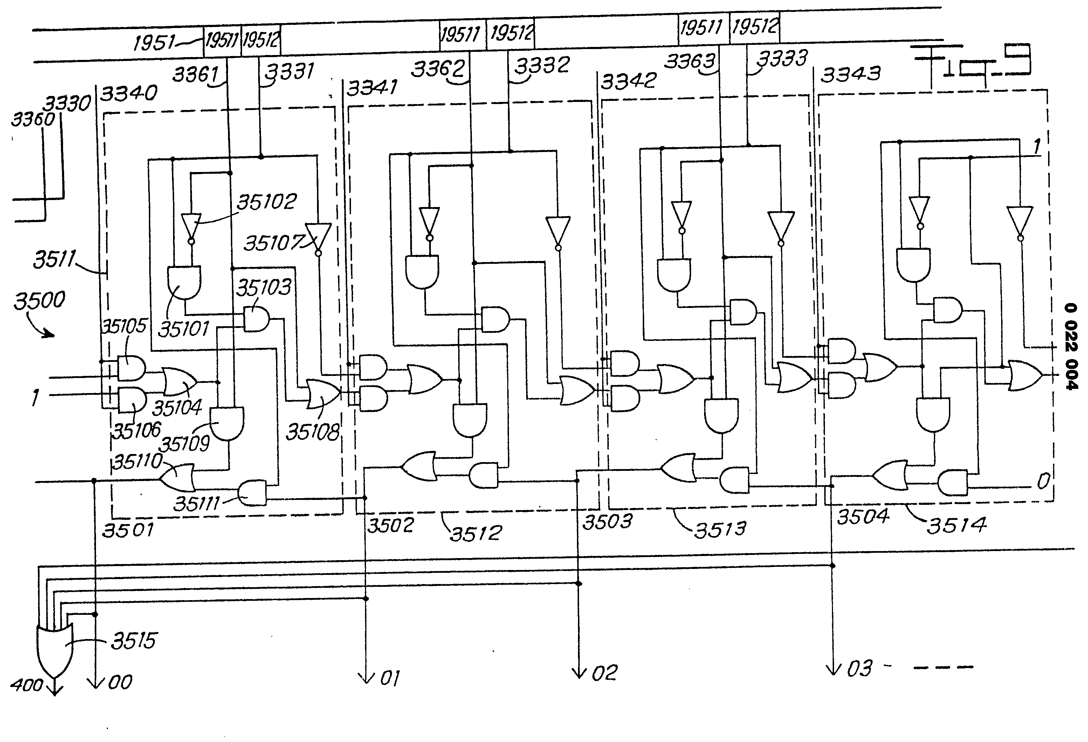

Dans la zone verticale 110 (figures 3, 4) on introduit, en 1110 et 1111, si nécessaire, des codes relatifs aux séparateurs des différents niveaux (entités logiques, sous-articles, séquences, ...), le dispositif devant au moins permettre, pour chaque ligne de la table de commande, le chargement des séparateurs correspondant à deux niveaux de traitement. Le chargement du code de séparateur de premier niveau est nécessaire lorsque les entités logiques sur lesquelles le rapprochement est à effectuer ont une longueur variable.

Des codes représentatifs de la nature des entités logiques (information déclarée binaire ou héxadécimale ou alphanumérique, ...) de la nature du format des entités logiques (format fixe ou variable) et de la longueur du format lorsque celui-ci est fixe sont enregistrés respectivement en 1121, 1122 et 1123.

Le code de l'opération à effectuer sur chaque élément d'information des entités logiques à rapprocher est chargé en 1124. On notera que plusieurs cases 1124 sont prévues de manière, si nécessaire, à permettre le chargement de codes d'opération différents selon les colonnes de la table de référence. Le code de l'opération à effectuer comporte un élément d'information caractérisant la nature de l'opération (logique, arithmétique, ...) (11240) et un élément caractérisant la nature de l'opération logique (=, ≠, <, ≤, >, ≥) ou de l'opération arithmétique (+, ×, −, ÷, ...) ou de toute opération (11241).

Des codes commandant le transfert conditionnel ou inconditionnel des éléments d'information issus du fichier sont introduits en 1130 et 1131. Ces codes correspondent pour 1130 aux informations de premier niveau du dispositif (entité logique de longueur fixe ou variable) et pour 1131 aux informations de second niveau (séparateur de second niveau). Le séparateur marquant la fin d'une entité logique de longueur variable est transmis nécessairement avec l'entité logique qui lui correspond. En l'absence d'une entité logique de longueur variable à transférer, le code introduit en 1130 commande le transfert du séparateur correspondant. Lorsque les éléments d'information d'une séquence issue de la source ne sont pas soumis à rapprochement, le transfert de la séquence est commandé comme il en est d'une entité logique.

Des codes commandant la destination des informations qui sont issues de la source et dont le transfert est commandé par les codes introduits en 1130 et 1131, sont introduits en 1132. On notera que plusieurs cases 1132 sont prévues, en général en raison d'une case par opérateur de rapprochement, de manière, si nécessaire, à permettre pour les informations reçues de la source le stockage simultané sur plusieurs dispositifs de stockage (périphériques, sorties ou toute autre mémoire). Le code 1132 peut comporter autant de sous-ensembles, si nécessaire, pour commander le stockage par incrémentation de la mémoire de stockage ou par saut à une nouvelle adresse déterminée.

Dans la zone verticale 119 de la mémoire de commande (fig. 5 à 9), sont introduits les codes des opérations à effectuer en fin de traitement sur une entité logique ou une séquence d'entités logiques du fichier, ou en fin d'une opération de localisation.

Ces opérations comprennent les enchaînements à effectuer dans la table de référence. On considère d'abord les enchaînements du premier niveau. Ceux-ci sont à effectuer après chaque entité logique issue du fichier, c'est-à-dire après reconnaissance du séparateur du premier niveau, dans le cas d'une entité logique de longueur variable, ou, dans le cas d'une entité logique de longueur fixe, lorsque la dernière information appartenant à cette entité logique et correspondant à cette longueur déclarée a été identifiée par comptage. Pour ces enchaînements du premier niveau, on peut introduire dans la zone de mémoire 119 les codes relatifs respectivement à : l'instruction de saut d'entités logiques de référence ou de reprise de la ou des mêmes entités logiques de référence ou d'absence d'enchaînement, au caractère

7

conditionnel ou inconditionnel du saut ainsi commandé. Des codes analogues sont alors introduits pour les enchaînements à effectuer après chaque sous-article ou séquence du fichier, c'est-à-dire correspondant au second niveau du dispositif, tel que choisi dans cet exemple.

Toutefois, dans l'exemple illustré, les commandes d'enchaînement sur la table des entités logiques de référence sont commandées par les codes commandant les enchaînements de la table de commande, toute incrémentation de la table des entités logiques de référence étant inhibée pour un code opération de comparaison NOP relatif aux rapprochements à effectuer pour la ligne de la table de commande pour laquelle est commandé le saut.

Les opérations à effectuer en fin de localisation ou de rapprochement, en effet, comportent aussi les enchaînements à effectuer dans la mémoire de commande (figure 5). Pour les enchaînements à effectuer au premier niveau du dispositif, tel que décrit ci-dessus, on introduit en 1910 et 1911 les codes relatifs respectivement à l'instruction de saut dans la table de commande ou de reprise dans la table de commande ou de retour dans la mémoire auxiliaire, au caractère conditionnel ou inconditionnel dudit enchaînement. Des codes analogues sont introduits en 1914 et 1915 pour les enchaînements à effectuer après chaque sous-article ou séquence du fichier, c'est-à-dire correspondant au second niveau du dispositif choisi.

En 1920 et 1921 (figure 6), sont enregistrés les codes relatifs respectivement aux enchaînements à effectuer sur le périphérique en lecture, à savoir, pour 1920, l'indication que la lecture du périphérique est interrompue avec ou sans interruption du déroulement périphérique pour reprise au même positionnement du périphérique ; pour 1921, de façon conditionnelle ou non.

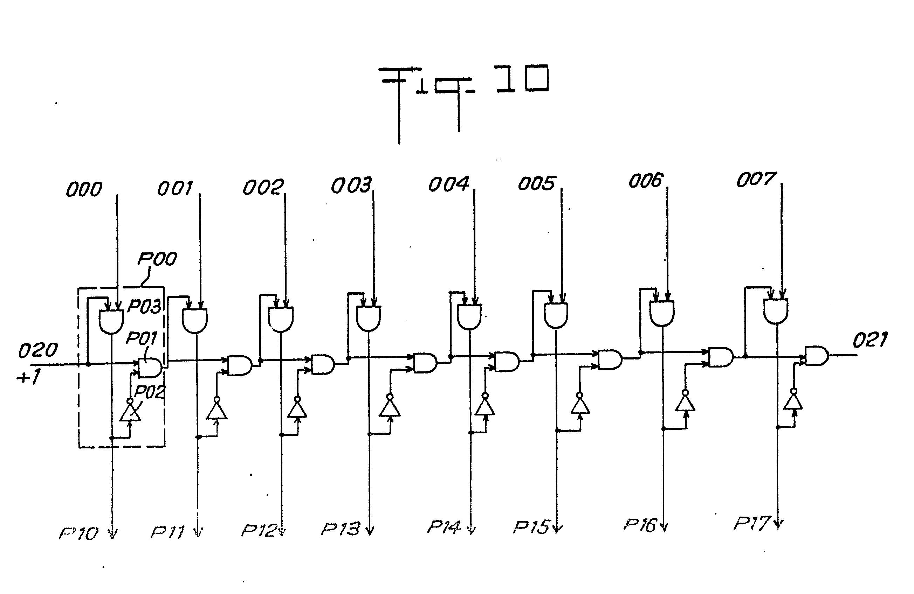

Sont encore enregistrés les codes d'opérations relatives aux tests (figure 7) : test logique ou arithmétique sur les résultats pour la conservation des informations stockées (1930) et comptage des résultats VRAI (1931).

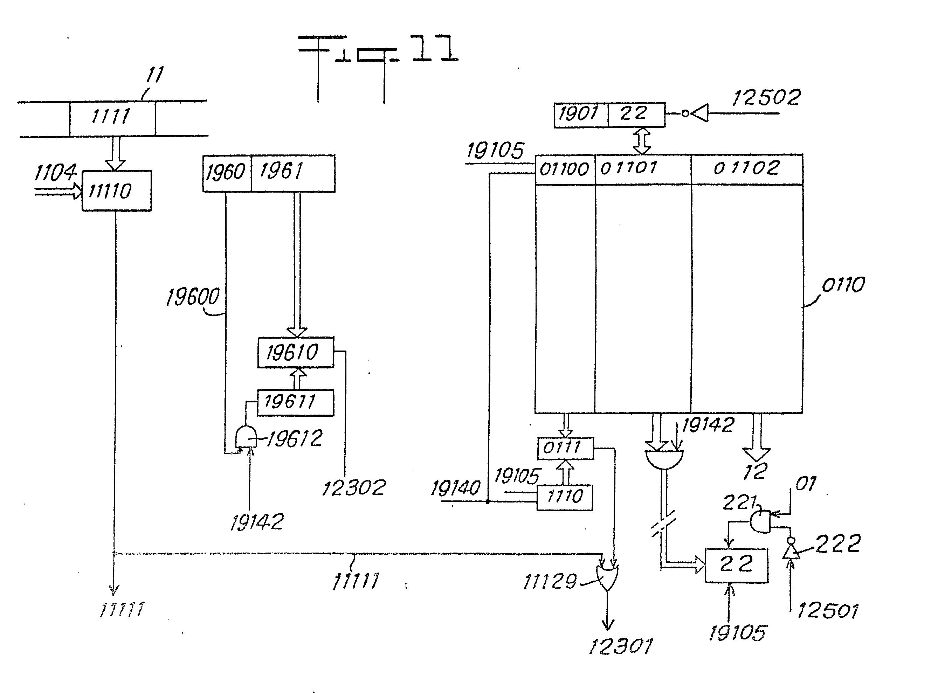

Enfin, les codes d'opérations relatives aux résultats de référence sont stockés au bout de la ligne de la mémoire de commande. En 1940, sont enregistrés les codes relatifs à la commande du transfert des résultats vers la mémoire auxiliaire. En 1950 (figure 8), dans deux sous-ensembles 19501 et 19502, sont enregistrés les codes relatifs au résultat 1 et 0 de référence, à raison d'un seul résultat par opérateur, et ceux relatifs au caractère SPACE pris pour masque du résultat et rendant VRAI ce résultat quels que puissent être les rapprochements effectués. En 1951 (figure 9), dans deux sous-ensembles 19511 et 19512, sont enregistrés les codes relatifs à l'opérateur OU ou ET de combinaison linéaire des résultats, ainsi qu'au caractère SPACE pris pour masque dudit opérateur de combinaison c'est-à-dire établissant une indépendance entre deux combinaisons linéaires du résultat. On notera que plusieurs cases sont prévues de façon à obtenir un résultat élémentaire par opérateur de rapprochement et à combiner entre eux lesdits résultats élémentaires.

Une localisation peut être effectuée au début ou en cours de traitement. Une ligne de la mémoire de commande peut alors correspondre à cette instruction de localisation. Cette localisation peut se faire, comme on l'a dit, par un rapprochement effectué entre une entité logique, par exemple une entité logique spéciale ou label et l'entité logique de référence servant à localiser les informations issues de la source. Cette localisation peut se faire aussi par identification d'un caractère spécial ou séparateur appartenant à la source. Cette localisation peut se faire aussi par identification d'un caractère spécial ou séparateur appartenant à la source. Elle peut se faire encore par comptage. Ce comptage peut être effectué sur des octets, quelle que soit la signification des octets reçus. La localisation par comptage de tels éléments d'information quelconques ou octets se fait comme il en est pour une entité logique de format fixe par une déclaration correspondant à une longueur d'entité logique ou donnée. La localisation peut au contraire résulter d'un comptage effectué sur des octets qui ont une signification particulière en raison de leur contenu, par exemple, des séparateurs, ou en raison de leur localisation dans le flot d'informations ou sur des entités logiques de format fixe, en particulier, des labels. La nature des éléments comptés peut être définie implicitement comme résultant des déclarations relatives aux séparateurs et aux données correspondant à la même ligne de commande.

Ces comptages sont exécutés par le dispositif de localisation 14 permettant de commander les enchaînements correspondants. Le comptage peut être un comptage simple ; ou il peut au contraire être combiné avec d'autres comptages dont la combinaison permet de localiser une information au cours d'un traitement répondant à un processus de bouclage. Lorsque les comptages sont à exécuter sur des unités logiques ou articles d'un fichier constitué d'articles de longueur connue, ils sont commandés et enchaînés par des informations de commande relatives notamment au nombre et à la longueur de ces articles et rangés dans des registres spéciaux.

Les comptages à effectuer pour le traitement d'informations appartenant à un article sont commandés, d'une part, par des informations de commande contenues dans les codes des cases 1910 et 1914 de la mémoire de commande 11 et, d'autre part, en ce qui concerne le nombre de traitements à effectuer pour une ligne de cette mémoire de commande, par l'information contenue dans la case 01100 de la mémoire à pile 0110 du dispositif de localisation 14 (figure 11), ou toute autre mémoire et notamment de la mémoire auxiliaire 51 prise comme mémoire à pile du dispositif 14.

Cette même ligne de la table 0110 du dispositif de localisation 14 comporte également des cases 01101 et 01102 où sont enregistrées les valeurs de reprise respectivement du compteur 22 de la table des entités logiques 21 et du compteur 12 de la table de commande 11 pour la commande des enchaînements à effectuer en fin de bouclage commandé par l'information contenue dans cette case 01100 ou sur identification du séparateur du second niveau.

La fin de l'article correspond, dans la mémoire 0110, à l'adresse ou position mémorisée de la ligne dont la case 01102 commande le saut pour la boucle la plus enveloppante.

Les informations à ranger dans les cases 01100, 01101 et 01102 le sont séquentiellement, ligne par ligne, dans la mémoire à pile 0110 selon l'ordre dans lequel les informations correspondant aux traitements à exécuter se présentent en cours de déroulement du fichier.

On a décrit ci-dessus l'ensemble des codes qui peuvent être enregistrés dans une ligne de la mémoire de commande correspondant à une zone hozirontale du tableau. Bien entendu, seuls les codes appropriés pour l'exécution du traitement désiré sont enregistrés.

Les adresses correspondant à la mémoire auxiliaire 51 sont chargées dans un dispositif associatif permettant d'associer une à une lesdites valeurs d'adressage de la mémoire auxiliaire aux valeurs significatives fournies par le compteur de la table de commande à un instant donné.

Quel que soit le mode choisi de réalisation du dispositif conforme à l'invention, toutes les instructions contenues dans une ligne de la mémoire de commande sont lues simultanément par le circuit de microcommande 10 pour être transformées en signaux de commande.

Avant de décrire le circuit de microcommande 10 en référence aux figures 3 à 11, on va maintenant décrire schématiquement la variante de l'opérateur de rapprochement choisi, toujours à titre d'exemple, dans ce dispositif pour mettre en œuvre un procédé de type de celui décrit dans le brevet français n° 2 293 741 et son certificat d'addition n° 2 330 075.

Opérateur de rapprochement

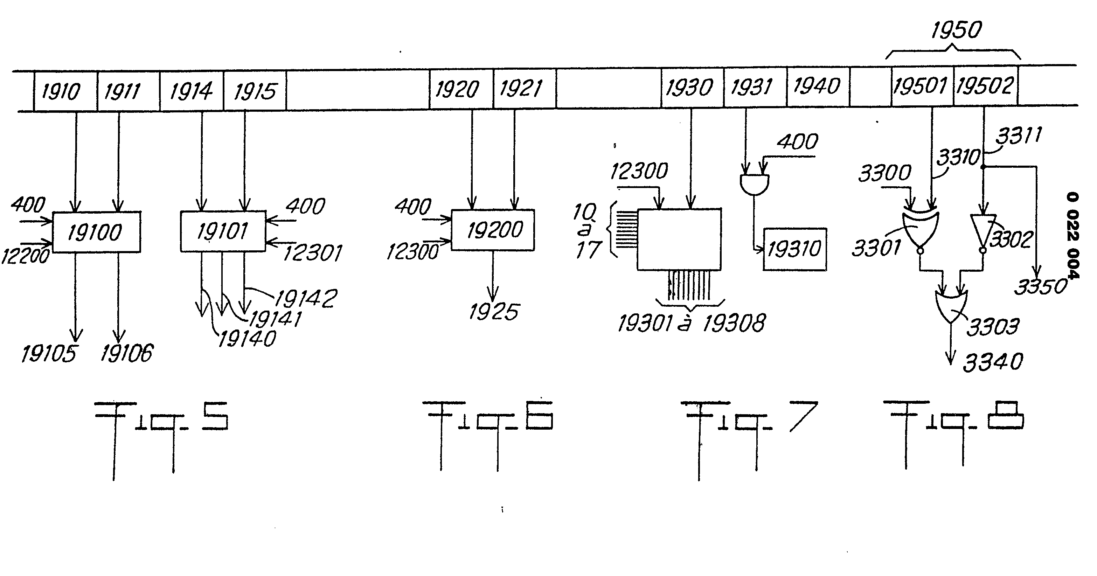

Comme le montre la figure 2, chacun des opérateurs de rapprochement 310, 311, 312, 313 se compose essentiellement de trois éléments 301, 302, 304 pour combiner entre eux les résultats élémentaires correspondant au rapprochement d'une entité logique.

L'élément 301 compare l'élément d'information reçu de la source par la liaison 1104 et l'élément de référence correspondant reçu par la liaison 2100. Les reports sont mémorisés, à chaque élément d'information reçu par des bascules 3010, 3011, 3012. Le comparateur 301 est initialisé en début d'entité logique par une liaison 010 et il est actionné, de même que les bascules 3010, 3011 et 3012 par le signal d'horloge 01 émis pour chaque signal d'information reçu. A la fin de chaque entité logique, les contenus des bascules 3010, 3011 et 3012 représentent le résultat cumulé des comparaisons successives des éléments d'information.

Un comparateur 302 effectue, à la fin de l'entité logique reçue, la comparaison du résultat obtenu avec le code de référence chargé dans la case 11241 de la mémoire de commande 11 pour un code 11240 donnant à l'opération une signification logique. Les informations correspondant au code contenu en 11241 sont transmises au comparateur 302 par les liaisons 12500 après décodage en 11250 du contenu de 11240. Une porte 11251 a ses entrées reliées aux liaisons 12500 pour émettre sur une liaison 12501 une information correspondant, après décodage du contenu de 11240, à un code d'opération nul (NOP) en 11241.

Une bascule 304 initialisée par la liaison 010 permet de mémoriser selon une fonction ET les résultats fournis par le comparateur 302 et transmis à travers une porte OU 3013. Celle-ci a aussi une entrée reliée à la liaison 12501. Une liaison 12200 transmet à la bascule 304 l'information correspondant à une fin d'entité logique (voir paragraphe suivant) pour commander le transfert du résultat par la liaison 3300.

On dispose donc sur la liaison 3300 du résultat du rapprochement effectué sur chaque entité logique reçue, dans le cas d'un code opération non nul, ou d'un résultat virtuel, dans le cas d'un code opération nul.

Commande d'opérations du premier niveau

Sur la figure 3 est représenté schématiquement, pour le premier niveau du dispositif, le dispositif de commande relatif à la déclaration du séparateur et des données, à l'exclusion des codes 1124, dont les fonctions des sous-ensembles 11240 et 11241 sont expliquées ci-dessus. Le séparateur déclaré en 1100 correspond au premier niveau du dispositif. Il est identifié par le comparateur 11100 qui reçoit de la source chaque élément d'information (octet) par la liaison 1104. La liaison 01 transmettant le signal d'horloge correspondant à l'élément d'information reçu de la source actionne le compteur 11230 dont le résultat est comparé par le comparateur 11231 à la valeur de longueur affichée dans la case 1123. Les informations contenues dans la case 1122 (format variable ou fixe) sont décodées en 11220, notamment pour activer respectivement par les liaisons 11221 et 11222, soit le comparateur 11100 (format variable), soit le comparateur 11231 (format fixe). Une porte OU 11232 reçoit un signal du comparateur 11100 après chaque identification de séparateur de premier niveau (format variable) et reçoit un signal du comparateur 11231 après comptage du nombre d'éléments d'information enregistré en 1123 (format fixe).

La liaison 12200 en sortie de la porte OU 11232 commande donc l'exécution des opérations à effectuer en fin d'entité logique de longueur fixe ou sur identification du séparateur.

Les informations contenues en 1121 sont éventuellement décodées pour des traitements à effectuer par l'étage de la mémoire auxiliaire.

## Commande des opérations de second niveau

On utilise le dispositif 14 de localisation des informations par comptage ou par identification de séparateurs représenté schématiquement sur la figure 11.

Dans les registres 1960 et 1961, sont chargées les informations relatives respectivement à la commande du comptage des articles appartenant à un même fichier et au nombre de ces articles.

Dans la mémoire à pile 0110 de type FIFO (FIRST IN, FIRST OUT), sont stockées par ligne dans des cases 01100, 01101 et 01102 les informations relatives respectivement à la localisation par comptage des boucles à effectuer, à la valeur de reprise correspondante du compteur 22 de la table des entités logiques de référence 21 et à la valeur de reprise correspondante du compteur 12 de la table de commande 11. Les informations contenues séquentiellement dans la colonne contenant les cases 01100 de la mémoire à pile 0110 fournissent les valeurs de localisation par comptage des entités logiques ou des séparateurs d'un fichier exprimées en unités de traitement correspondant chacune à une ligne de la mémoire de commande 11. Par exemple, si l'on veut commander deux fois quatre boucles sur un premier traitement suivies de deux boucles sur un second traitement, la colonne correspondant pour la mémoire à pile 0110 aux cases 01100 sera chargée comme ci-dessous :

4
2
4
2

Pour un traitement correspondant à une ligne de la mémoire de commande 11, le contenu de la case 01100 est comparé par le comparateur 0111 à la valeur du compteur 1110 actionné par la liaison 19105 de la figure 5 (voir plus loin le paragraphe intitulé « Enchaînements sur la table de commande ») commandant les opérations à effectuer en fin d'entité logique de longueur fixe ou sur identification du séparateur de premier niveau. Lorsque le nombre de traitements enregistré dans la case 01100 est atteint, le comparateur 0111 fournit un résultat VRAI et commande les opérations à exécuter, pour le second niveau du dispositif, sur une liaison 12301 par l'intermédiaire d'une porte OU 11129. Cette liaison 12301 est également activée, à travers la porte 11129, par le résultat VRAI de la sortie 11111 du comparateur 11110 correspondant à la comparaison effectuée sur le séparateur de second niveau avec l'élément d'information reçu de la source par la liaison 1104. La liaison 12301 permet d'activer l'information de commande correspondant aux enchaînements à effectuer sur la table de commande 11 et transmise par la liaison 19140 de la figure 5 (voir paragraphe suivant) correspondant aux cases 1914 et 1915 de cette table de commande 11 pour le second niveau du dispositif. Par la liaison 19140, on commande la remise à zéro du compteur 1110, la reprise des traitements à effectuer selon les valeurs de reprise des compteurs 22 et 12 contenues dans les cases 01101 et 01102 de la même ligne de la mémoire à pile 0110 et l'incrémentation de cette mémoire à pile 0110. Cette mémoire à pile est alors activée par la liaison 19105 de la figure 5 pour les codes contenus dans les cases 1910 et 1911 et correspondant à une instruction de boucle pour le premier niveau du dispositif. A défaut d'instruction de bouclage correspondant au second niveau du dispositif, la liaison 12301 commande une incrémentation de la table des entités logiques de référence 21 et de la table de commande 11.

Les informations contenues dans les cases 01101 sont successivement enregistrées, zone par zone, au moment du chargement de la table 21 préalablement à l'exécution du procédé de rapprochement. L'enregistrement dans les cases 01101 des valeurs de reprise du compteur 22 est effectué au moyen du dispostif 1901. Celui-ci permet, par comparaison, de ne mémoriser dans la case 01101 correspondant à une ligne de la mémoire à pile 0110 que la valeur d'initialisation du compteur 22 correspondant, pour les entités logiques de cette zone, à la plus longue des entités logiques appartenant à la zone immédiatement précédente. En d'autres termes, pour la première ligne d'une zone de la table de référence, la valeur du compteur 22 est celle qui suit la valeur du compteur pour le dernier élément d'information de l'entité logique la plus longue de la zone précédente de la table de référence. Pour certaines opérations, notamment comme il en est des opérations de séparation et d'inter-classement, cette valeur d'initialisation peut être fixée arbitrairement pour une longueur maximale correspondante des entités logiques de la zone précédente.

Lorsqu'il n'y a pas d'entité logique à rapprocher pour un traitement à effectuer correspondant à une ligne de la table de commande 11, c'est-à-dire lorsque le code d'opération de la case 11241 après décodage de 11240 donne pour cette ligne une valeur égale à zéro (NOP), la liaison 12501 de la figure 2 bloque le compteur 22 de la table des données de référence 21 pour sa valeur correspondant à l'initialisation de cette zone. Cette valeur du compteur 22 est enregistrée éventuellement dans la case 01101 de la mémoire à pile 0110 correspondant à cette ligne de la mémoire de commande 11.

Les informations contenues dans les cases 01102, et correspondant aux valeurs de reprise dans la table de commande 11 sont enregistrées successivement au moment du chargement de cette table 11.

A la fin de chaque article, on commande par une liaison 19142 (voir figure 5), l'incrémentation d'un compteur 19611 à travers une porte ET 19612 validée par la liaison 19600 transmettant l'information contenue dans la case 1900 (commande de comptage d'articles). La valeur du compteur 19611 est comparée, par un comparateur 19610 au contenu de la case 1961 (nombre d'articles). La sortie 12302 du comparateur 19610 commande, pour un résultat VRAI, un saut à la ligne consécutive de la table de commande correspondant aux opérations à effectuer en fin de traitement (opérations terminales).

Transfert des informations

Sur la figure 4 est représenté schématiquement le dispositif de commande relatif au transfert des informations. Le code contenu en 1130, après décodage par le décodeur 1133, et le code contenu en 1131 activent, par les liaisons 11300 et 11310, le décodage en 11321, 11322..., des informations contenues dans les cases 1132 pour commander le transfert des informations reçues de la source par la liaison 1104 vers les mémoires à pile 61, 71, 81, 91... des périphériques correspondants. Les liaisons 11300 et 11310 sont unies par une porte OU 1138 dont la sortie est donc activée lorsqu'un transfert est à faire.

L'information transmise par une liaison 11301, après décodage en 1133 avec la liaison 11223 correspondant au code contenu dans la case 1122 de la figure 3 et relatif au format des données déclarées, active, s'il y a déclaration de données, le résultat transmis par la liaison 400 de la figure 9 et les résultats transmis par les liaisons P10, P11, P12, P13, P14, P15, P16, P17..., de la figure 10. On ne valide donc les résultats que s'ils concernent des données.

En cas d'absence d'information dans la case 1122, c'est-à-dire en l'absence de donnée déclarée, le code 1130, après décodage en 1133, active par la liaison 1134, une porte ET 1135 pour laisser passer vers une porte NON OU 1136 la liaison 11101 de la figure 3 relative au résultat de la comparaison effectuée pour le séparateur de premier niveau par le comparateur 11100.

La liaison 11302, qui est toujours relative au séparateur de second niveau du dispositif, active une porte ET 1137 pour laisser passer vers la porte NON OU 1136 le résultat de la comparaison effectuée pour le séparateur de second niveau par le comparateur 11110 de la figure 11 et transmis par la liaison 11111 de la même figure.

Une porte ET 1139 reçoit les informations de sortie des portes 1138 et 1136 pour transmettre l'information résultante sur une liaison 11000 correspondant au transfert des séparateurs. Cette information résultante transmise par la liaison 11000 décrémente donc, en l'absence de séparateurs, pour un code 1130 ou 1131 non nul, les compteurs 62, 72, 82, 92... des périphériques correspondants.

Enchaînements sur la table de commande

Sur la figure 5 est représenté schématiquement le dispositif de commande relatif aux enchaînements à effectuer sur la table de commande 11 ainsi qu'éventuellement sur la table des entités logiques de référence 21. Les codes correspondant au premier niveau du dispositif sont enregistrés dans les cases 1910 et 1911 et ceux correspondant au second niveau en 1914 et 1915.

Les informations contenues dans les cases 1910 et 1911 sont décodées en 19100 avec l'information transmise par la liaison 12200 relative à la commande des opérations à exécuter à la fin des rapprochements pour le premier niveau du dispositif (figure 3) et avec l'information transmise par la liaison 400 et relative au résultat VRAI ou FAUX des rapprochements précédents (figure 9). Les informations contenues en 1914 et 1915 sont décodées en 19101 avec l'information transmise par la même liaison 400 de la figure 9 et avec l'information transmise par la liaison 12301 et relative à la commande des opérations à exécuter en fin de rapprochement pour le second niveau du dispositif (figure 11).

Les signaux de commande correspondant aux instructions de boucles enregistrées dans les cases 1910 et 1914 sont transmis par des liaisons 19105 et 19140 en sortie des décodeurs 19100 et 19101. Les signaux de commande correspondant aux instructions de boucles enregistrés dans la case 1914 commandent, par la liaison 19142, pour une fin d'article, outre les opérations commandées par la liaison 19140, les opérations correspondant à cette fin d'article.

A défaut de code correspondant dans les cases 1910 et 1914, les liaisons 19106 et 19141 commandent, conditionnellement ou non selon les codes contenus dans les cases 1911 et 1915, une incrémentation du compteur 12 de la mémoire de commande 11 (saut implicite dans la mémoire de commande).

Enchaînements sur la table de référence

Au cours d'opérations de rapprochement correspondant à une ligne de la mémoire de commande, le compteur 22 est incrémenté pour les éléments d'information successifs reçus des entités logiques à rapprocher et est ramené à sa valeur d'initialisation (première ligne de la zone horizontale de la table de référence correspondant à cette ligne de la mémoire de commande) après chaque traitement (bouclage au premier niveau par initialisation du compteur 22 par la liaison 19105).

Comme représenté sur la figure 11, le compteur 22 est relié aux cases 01101 à travers un dispositif à porte ET 0112 qui est commandée par la liaison 19142 de manière à autoriser le transfert d'une valeur de reprise contenue dans une case 01101 lorsque la case 1914 contient une information de commande de bouclage au second niveau du dispositif. En l'absence de cette information de commande, il n'y a transfert de nouvelle valeur d'initialisation du compteur 22.

Le compteur 22 est, en outre, incrémenté par la liaison 01, à chaque fin d'élément d'information reçu du fichier, à travers une porte ET 221 dont l'autre entrée est connectée à la liaison 12501 (figure 2) par un inverseur 222. Il n'y a donc incrémentation du compteur 22 (passage d'une ligne à la suivante de la table de référence) que lorsque le code opération n'est pas nul sur la liaison 12501 (absence de NOP).

A la fin d'une opération de rapprochement effectuée sur des entités de référence d'une zone horizontale de la table de référence, on passe à la première ligne de la zone horizontale suivante en même temps que l'on passe dans une autre ligne de la mémoire de commande. S'il n'y a pas de code opération dans la case 11241 de cette autre ligne, toute nouvelle incrémentation du compteur 22 est bloquée.

Enchaînements sur périphérique

Sur la figure 6 est représenté schématiquement le dispositif de commande relatif aux enchaînements à effectuer sur le périphérique en lecture. Les informations contenues dans les cases 1920 et 1921 (interruption conditionnelle ou non de la lecture du périphérique) sont décodées en 19200 avec l'information transmise par la liaison 400 et relative aux résultats des rapprochements (figure 9) et l'information transmise par la liaison 12300 de la figure 11 et relative à la fin d'article. L'information transmise par la liaison 1925 en sortie du décodeur 19200 commande, d'une part, sur le contrôleur de périphérique correspondant, la mémorisation de l'adresse et de la position de piste et l'interruption de la lecture du périphérique et, d'autre part, envoie un signal d'état sur le dispositif de la mémoire auxiliaire.

Opérations sur résultats de référence

Les figures 8 à 10 donnent schématiquement les principes de l'ensemble du dispositif de commande relatif aux résultats de référence.

Les cases 1950 comportent chacune deux sous-ensembles, à savoir un sous-ensemble 19501 où est enregistrée la valeur binaire 1 ou 0 correspondant au résultat de référence à raison d'un résultat par opérateur et un sous-ensemble 19502 où est enregistré l'élément binaire relatif au masque, la valeur 0 étant choisie pour des raisons de commodité comme représentative du masque. La figure 8 donne le schéma classique d'un dispositif de comparaison associé à un dispositif de masquage. Le dispositif de comparaison comporte une porte OU EXCLUSIF 3301 qui reçoit, d'une part, l'information d'un sous-ensemble 19501 par une liaison 3310 et, d'autre part, la liaison 3300 qui transmet le résultat du rapprochement effectué, comme le montre la figure 2. Une liaison 3311 transmet à un inverseur 3302 l'information du sous-ensemble 19502. Les sorties de la porte 3301 et de l'inverseur 3302 sont unies par une porte OU 3303 dont la sortie est reliée à une liaison 3340 pour transmettre à l'opérateur de combinaison horizontale 3500 (figure 9) le résulat VRAI ou FAUX obtenu selon la comparaison et le masquage décrits ci-dessus.

La figure 9 donne les principes de l'opérateur booléen et modulaire horizontal 3500 formé de modules identiques 3511, 3512, 3513, 3514.

Les cases 1951 comportent deux sous-ensembles, à savoir un sous-ensemble 19511 où est enregistrée la nature de l'opérateur de combinaison + ou ×, à savoir, dans cet exemple 0 pour × et 1 pour +, et un ensemble 19512 où est enregistré l'élément binaire relatif au masque de l'opérateur, la valeur 0 étant choisie pour des raisons de commodité comme masque de l'opérateur.

Les liaisons 3340, 3341, 3342, 3343... transmettent, comme il est montré figure 8, les résultats booléens VRAI ou FAUX des rapprochements obtenus par les opérateurs de rapprochement 310, 311, 312, 313... Les liaisons 3360, 3361, 3362, 3363... et 3330, 3331, 3332, 3333, ... transmettent les informations contenues dans les cases 19511 et 19512 correspondantes.

Chaque module 3510, 3511, 3512, 3513, ... peut être considéré comme étant disposé entre deux liaisons consécutives 3340, 3341, 3342, 3343..., pour valider les résultats transmis sur ces liaisons selon les codes enregistrés dans les cases 1951. La structure d'un module est la suivante.

Une porte ET 35101 reçoit sur une entrée le code relatif au masquage enregistré en 19512 et sur son autre entrée le code opérateur enregistré en 19511 et inversé par un inverseur 35102. La sortie de la porte 35101 (inverse du code opérateur en l'absence de masquage) commande une porte ET 35103 qui reçoit la sortie d'une porte OU 35104. Celle-ci reçoit les sorties de deux portes ET 35105 et 35106 qui transmettent le résultat de rapprochement (liaison 3340 ou 3341 ou 3342 ou 3343, ...) sous la commande, respectivement de l'inverse du code relatif au masquage correspondant au module situé à gauche (code inversé par un inverseur 35107) et de la sortie d'une porte OU 35108 dont les entrées sont reliées à la case 19511 (code opérateur) et à la sortie de la porte 35103. La sortie de la porte OU 35104 est également reliée à une entrée d'une porte ET 35109 qui reçoit sur son autre entrée le code opérateur. Le résultat sur la liaison 3340, 3341, 3342, 3343, ... est validé ou non en sortie du module sur une liaison (respectivement 3501, 3502, 3503, 3504, ...) branchée à la sortie d'une porte OU 35110. Celle-ci a une entrée reliée à la sortie de la porte ET 35109 et l'autre entrée reliée à la sortie d'une porte ET 35111 qui reçoit le code relatif au masquage sur une première entrée de commande et la sortie du module situé immédiatement à droite sur sa deuxième entrée.

La deuxième entrée du module situé le plus à droite est en permanence au niveau logique bas (0), alors que sa liaison d'entrée 3334 est au niveau logique haut. Le niveau de l'entrée 3364 n'est pas critique. Les entrées de commande des portes ET 35105 et 35106 du module situé le plus à gauche sont au niveau haut (1).

Le fonctionnement de l'opérateur 3500 est le suivant.

Un code opérateur égal à 1, correspondant par conséquent à un OU et enregistré en 19511, a pour conséquence de valider par la porte 35108 l'information fournissant un résultat VRAI ou FAUX par la liaison de sortie d'opérateur de rapprochement (liaison 3340, 3341, 3342, 3343, ...) qui lui correspond selon la syntaxe habituelle, c'est-à-dire la liaison reçue immédiatement à droite, donc de valider le résultat suivant indépendamment du résultat précédent. Le même code opérateur égal à 1 a pour conséquence de valider le résultat VRAI ou FAUX correspondant à la liaison 3340, 3341, 3342 ou 3343 situé immédiatement à sa gauche, c'est-à-dire de le valider, à travers les portes 35109, 35110, par la liaison correspondante 3501, 3502, 3503 ou 3504 indépendamment du résultat de droite.

Un code opérateur égal à 0, c'est-à-dire correspondant à un ET aura au contraire, pour un élément d'information relatif au masque et égal à 1, c'est-à-dire en l'absence de masquage, pour effet de soumettre la validité d'un résultat VRAI élémentaire qui le suit à un résultat VRAI situé immédiatement à sa gauche (par la porte 35103) et de ne pas valider le résultat VRAI pouvant correspondre à la liaison 3340, 3341, 3342 ou 3343 située immédiatement à sa gauche.

Un code relatif au masquage et égal à 0, c'est-à-dire signifiant qu'il y a masquage du code opérateur booléen aura pour effet de se comporter en ce qui concerne les combinaisons horizontales comme il en est d'un code opérateur égal à 1, c'est-à-dire correspondant à un OU. Ainsi, un code signifiant qu'il y a masquage de l'opérateur valide le résultat suivant indépendamment du résultat précédent par l'inverseur 35107 et valide le résultat situé immédiatement à sa gauche indépendamment du résultat de droite (porte 35111 fermée). Le même code égal à 0 aura, de plus, comme effet d'interdire une combinaison OU pour les résultats obtenus en 3501, 3502, 3503 et 3504 entre deux résultats situés sémantiquement de part et d'autre de ce dit code égal à 0.

Un OU effectué entre les résultats 3501, 3502, 3503, 3504, ... par la porte 3515 permet de commander, par la liaison 400 en sortie de cette porte, les opérations à exécuter conditionnellement et correspondant aux liaisons 12300 (fin d'article), 12301 (enchaînement sur la table de commande) de la figure 11.

Le dispositif décrit figure 9 peut être complété par le dispositif de priorité de la figure 10 permettant de ventiler sur un parmi plusieurs périphériques les informations à conserver selon les encadrements obtenus pour des opérateurs effectuant un rapprochement suivant un code d'inégalité.

Dans l'exemple illustré, les résultats obtenus en 00, 01, 02, 03, 04, 05, 06, 07, ... sont validés en P10, P11, P12, P13, P14, P15, P16, P17, ... pour le seul résultat VRAI le plus à gauche par exemple pour un code opérateur. La liaison 020 est mise à 1.

Le dispositif de priorité est, dans l'exemple illustré, formé de modules identiques P00 constitués par une porte ET P01 dont une première entrée reçoit la sortie du module précédent (ou la liaison 020 pour le module le plus à gauche) et dont l'autre entrée reçoit la sortie d'un inverseur P02 qui inverse la sortie d'une porte ET P02 dont une entrée est reliée à l'entrée de la porte P01 et dont l'autre entrée reçoit le résultat à valider ou non sur la sortie de cette porte P02. Ainsi, tant que les résultats à valider sont nuls, de gauche à droite, un niveau 1 est présent sur les sorties des modules P00 et un niveau 0 est présent sur les sorties de validation. Dès qu'un résultat est au niveau 1, la sortie de validation correspondante est à 1 et un niveau 0 est établi sur les sorties des modules situés à droite, ce qui force le niveau 0 sur les sorties de validation de ces modules quelle que soit la valeur du résultat à valider.

Le dispositif illustré par la figure 10 accorde donc bien la priorité au premier résultat VRAI apparaissant depuis la gauche de la figure.

Commande relative aux tests

La figure 7 donne schématiquement le principe du dispositif de commande relatif aux tests effectués pour la conservation des éléments stockés. Une information contenue dans la case 1930 active par les liaisons 19301, 19302, 19303, 19304, ... après décodage en 19300, les dispositifs de reprise des différents compteurs des mémoires à pile 62, 72, 82, 92, ... pour lesquelles ont été transmises les informations à stocker selon les codes contenus dans les cases 1132. Le dispositif de décodage 19300 reçoit la liaison 12302 de la figure 11 et est activé par les liaisons P10, P11, P12, P13, P14, P15, P16, P17 de la figure 10.

L'information contenue dans le code de la case 1931 (instruction de comptage des résultats VRAI) est activée pour un résultat VRAI par la liaison 400 de la figure 9 pour commander le compteur 19310 qui compte les résultats VRAI.

Exemples

Exemple 1

Soit à chercher les noms des personnes nées à Montpellier entre 1940 et 1970 dans un fichier dont la structure est la suivante :

| | | ARX | ARX34 ⌴ | | | | / |
|---|---|---|---|---|---|---|---|

NOM          LIEU     DATE

| / | / | / | | | ⌴ | | ⌴ | ⌴ |
|---|---|---|---|---|---|---|---|---|

| / | | ✶ | |
|---|---|---|---|

La mémoire de commande du processeur à unités parallèles est à charger comme ci-après :

| | D | S | M | A | I | P | T | R |
|---|---|---|---|---|---|---|---|---|
| Ø | :AF64 | : | : | : | : | : | : | : |
| 1 | :AFØ3 | : | : I | : P | : | : | : | : |
| 2 | :AV = | :⌴ ✶ : | I | : P | : | M : RI | : | : 1 |
| 3 | : | :╱ : | | : | : B | : | : | : |
| 4 | :AFØ5 | : | : C | : P | : | : | : | : |
| 5 | :AV = | : ⌴ | : | : | : | : | : | : 1 |
| 6 | :AFØ4⟨ ⟩: | : | : | : | : | : | : 1 x 1 |
| 7 | : | :╱ | : C | : P | : A | : | : T | : |

(Voir Tableau p. 15)

14

et la table de référence comme ci-dessous :

| | | |
|---|---|---|
| Ø | A | |
| 1 | R | |
| 2 | X | |
| 3 | A | |
| 4 | R | |
| 5 | X | |
| 6 | 3 | |
| 7 | 4 | |
| 8 | ⊔ | |
| 9 | M | |
| 10 | O | |
| 11 | N | |
| 12 | T | |
| 13 | P | |
| 14 | E | |
| 15 | L | |
| 16 | L | |
| 17 | I | |
| 18 | E | |
| 19 | R | |
| 20 | ⊔ | |
| 21 | 1 | 1 |
| 22 | 9 | 9 |
| 23 | 4 | 7 |
| 24 | Ø | Ø |

Dans la table de commande, les colonnes successives sont D pour données et codes opératoires, S pour séparateurs, M pour transferts, A pour la désignation des dispositifs de stockage correspondants, I pour les instructions sur la table de commande, P pour les instructions correspondant aux enchaînements sur périphériques en lecture, T pour les instructions correspondant aux tests et R pour les instructions correspondant aux résultats de référence.

Dans la colonne des données, AF désigne l'information de format fixe, AF03, AF04, AF05 une information de format fixe de 3, 4, 5 octets, AV une information de format variable.

Dans la colonne M, I signifie transfert inconditionnel et C transfert conditionnel.

Dans la colonne A, P signifie le périphérique en lecture.

Dans la colonne I, M signifie saut à la mémoire auxiliaire, B signifie boucle et A boucle correspondant à la fin d'article.

Dans la colonne P, RI signifie interruption inconditionnelle pour reprise à la même adresse sur la piste.

Dans la colonne T, T signifie test logique pour la conservation des résultats.

## Exemple 2

Soit à effectuer sur un fichier structuré en longueur fixe quatre boucles à l'intérieur de deux boucles en supposant, si besoin est, que les bouclages à effectuer sont donnés par le système,

Soit, tel que décrit ci-dessous, le fichier bibliographique correspondant :

15

**0.022 004**

| ← 3 | 12 | 6 | 3 | 4 | 4 | 4 | 4 |
|---|---|---|---|---|---|---|---|

| F712 | (N° BIBLI) | (RUBRIQUE) | B 4 | (CODES D'ANALYSE DU CONTENU) |
|---|---|---|---|---|

| 6 | 3 | 4 | 4 | 4 | 4 | 4 |
|---|---|---|---|---|---|---|

| (RUBRIQUE) | B5 | (CODES D'ANALYSE DU CONTENU) |
|---|---|---|

(les chiffres situés au-dessus des parties du fichier indiquent la longueur du format fixe des informations contenues dans ces parties).

Et soit à rechercher selon trois codes d'analyse se rapportant à deux rubriques le numéro de bibliothèque d'un ouvrage, on aura dans la mémoire de commande les instructions rangées comme ci-dessous (les lettres ont la même signification que dans l'exemple 1, la lettre L de la colonne A signifiant un renvoi vers la table de comptage 0110).

| | D | S | M | A | I | P | T | R |
|---|---|---|---|---|---|---|---|---|
| 0 | AF03 | | I | L | | | | |
| 1 | AF12 | | C | P | | | | |
| 2 | AF06= = | | | | | | | 1   1 |
| 3 | AF03 | | 1 | L | | | | |
| 4 | AF04=== | | | | B A | | T | 1x1x1 |

La table de référence se présentera de la façon qui suit, le chargement pouvant être effectué par le système :

| : 3 | : | 1 |
|---|---|---|
| 2 | | 8 |
| 7 | | 9 |
| 2 | | 5 |
| 8 | | 2 |
| 1 | | 0 |
| 2 | 1 | 4 |
| 4 | 6 | 4 |
| 3 | 3 | 4 |
| 2 | 8 | 7 |

327281 est un code de rubrique (6 chiffres), de même 189520.

2432, 8638 et 4447 sont des codes d'analyse de contenu (4 chiffres).

Exemple 3

Soit à effectuer un certain nombre aléatoire de boucles pour un fichier structuré partiellement en longueur variable par des labels ou des séparateurs,

Soit, tel que décrit ci-après le fichier bibliographique correspondant :

| | | | | 8 | | |
|---|---|---|---|---|---|---|
| § | / | / | OUVR⌣ | (N° BIBLI) | ·ANALYS ⌣ | |

| CICERON⌣PRO-MURENA⌣CATALINA⌣GALBA⌣ | * | SOUR ⌣ |
|---|---|---|

| BIBLI-NAT⌣ARSENAL⌣FLORENCE⌣VATICAN⌣ PARTICUL ⌣ | * | / § |
|---|---|---|

16

Et soit à rechercher le numéro de bibliothèque d'un ouvrage concernant CICERON et GALBA et utilisant des sources puisées dans des COLLECTIONS PARTICULIERES, la mémoire de commande sera chargée comme ci-dessous : (dans la colonne I, la lettre L signifie saut conditionnel au traitement consécutif).

| | D | S | M | A | I | P | T | R |
|---|---|---|---|---|---|---|---|---|
| ∅ | | / | | | | | | |
| 1 | AV | ⊔§ | | | L M | RI | | |
| 2 | AF∅8 | | C | P | | | | |
| 3 | AV == | ⊔/ | | | L B | | | 1   1 |
| 4 | AV === | ⊔* | | | B A | | T | 1x1x1 |

On peut remarquer que le dispositif peut admettre une plus grande souplesse de la structure du fichier et, par conséquent, de l'écriture des instructions si, comme supposé en particulier dans cet exemple, on stocke séparément le séparateur de fin d'article pour le rapprocher de chacune des informations reçues en cours de traitement selon le procédé de rapprochement décrit par le brevet français n° 2 293 741 et son certificat d'addition n° 2 330 075.

De même, la fin de l'article peut être repérée, pour une structure définie en longueur fixe, par la mémorisation de la longueur de l'article et, en tout état de cause, par la mémorisation de l'adresse correspondante dans la table de localisation à l'exécution de la reprise de la boucle la plus enveloppante, c'est-à-dire correspondant à l'article.

La table des références sera chargée comme suit :

| | | |
|---|---|---|
| OUVR⊔ | | |
| ANALYS⊔ | | SOUR⊔ |
| CICERON⊔ | GALBA⊔ | PARTICUL⊔ |

Dans les exemples, le chargement du dispositif de comptage se fait, en ce qui concerne les boucles à effectuer à l'intérieur d'un article, par l'intermédiaire du dispositif de chargement 13, en prenant B pour code de sélection des opérations de bouclage. L'instruction comprend alors, d'une part, la structure des bouclages à effectuer, et, d'autre part, la valeur de reprise du compteur 22 de la mémoire de commande pour le premier bouclage correspondant au second niveau du dispositif de commande.

Ainsi, pour les trois exemples donnés ci-dessus, la table du dispositif de comptage est chargée respectivement comme suit :

```
:4: :    :4:2:    :1:3:
:1:2:    :5:1:    :1:1:
```

L'absence de l'information de la valeur de reprise du compteur 12 de la mémoire de commande signifie une incrémentation de cette mémoire à effectuer en fin de bouclage.

Lorsque la fin des bouclages est commandée par un séparateur, les informations correspondant à la structure des bouclages peuvent être absentes.

Le chargement des cases 01001 se fait implicitement, comme décrit ci-avant, au moyen du dispositif 1901 de la figure 11.

## Revendications

1. Procédé pour la commande de rapprochement à effectuer entre des entités logiques de référence et des entités logiques issues d'un fichier (S), ledit procédé consistant en ce que :

(A) on enregistre des entités logiques de référence dans une table de référence (21) à plusieurs colonnes verticales (210-213) et plusieurs zones horizontales (A, B, C) en rangeant des entités logiques de référence de types différents verticalement, dans des zones horizontales différentes de la table de référence, dans l'ordre dans lequel les suites formées chacune d'entités logiques de même type à rapprocher se présentent, non nécessairement de façon consécutive, dans le fichier, chaque zone horizontale contenant des entités logiques de référence de même type rangées verticalement par colonnes chacune formée par les éléments d'information successifs constitutifs d'une entité logique de référence,

(B) on enregistre des informations de commande dans une mémoire de commande (11) distincte de la table de référence et, contenant, par ligne :

— des premières informations de commande qui comprennent, d'une part, des informations de commande (fig. 3 : 11240, 11241) relatives au rapprochement à effectuer entre des entités logiques de même type du fichier et des entités logiques situées dans une zone horizontale de la table de référence correspondant à la ligne de la mémoire dans laquelle ces informations de commande de rapprochement sont enregistrées et, d'autre part, des informations de commande (fig. 4: 1130, 1131, 1132) relatives au stockage d'entités logiques issues du fichier,

— des secondes informations de commande qui comprennent des informations de commande (fig. 5-9 : 1910-19512) d'opérations à effectuer à la fin du ou des rapprochements et/ou des informations de stockage d'une ou plusieurs entités logiques du fichier, lesdites informations de commande d'opérations comportant des instructions de bouclage (fig. 5 : 1910, 1911) éventuelles pour commander les enchaînements dans la mémoire de commande et dans la table de référence, et

— des troisièmes informations de structure (fig. 3 : 1110-1123) destinées à permettre la reconnaissance de la fin des entités logiques sur lesquelles doit être effectué le rapprochement et/ou le stockage commandé par des informations de commande de la ligne,

(C) on enregistre dans une mémoire d'enchaînements (fig. 11 : 0110), par ligne qui correspond à une ligne de la mémoire de commande, d'une part, des informations (01100) relatives au nombre de boucles à effectuer pour les traitements de la ligne correspondante de la mémoire de commande et, d'autre part, des informations (01101, 01102) relatives aux adresses de reprise dans la table de référence et dans la mémoire de commande lorsque le nombre de boucles a été effectué, et

(D) on fait défiler le fichier et on exécute au vol, sans stockage intermédiaire, les opérations correspondant aux premières informations de commande d'une ligne de la mémoire de commande, notamment en comparant selon une première fonction chaque entité logique à rapprocher en parallèle avec des entités logiques de référence contenues dans une zone horizontale de la table de référence, puis, après reconnaissance de la fin des entités logiques suivant les troisièmes informations de structure, on exécute les opérations correspondant aux secondes informations de commande de cette ligne, ces opérations étant effectuées dans le temps pendant lequel les éléments d'information sont reçus au cours du défilement du fichier,

— les passages d'une ligne à la suivante dans une zone horizontale de la table de référence étant effectués lorsque la ligne correspondante de la mémoire de commande contient une information de commande de rapprochement à effectuer avec la ou les entités logiques de référence contenues dans cette zone horizontale, et

— le cas échéant, en réponse aux instructions de bouclage (1910, 1911) contenues dans une ligne de la mémoire de commande et aux informations (01100) enregistrées dans une ligne correspondante de la mémoire d'enchaînements, on compte le nombre de traitements effectués correspondant à cette ligne de la mémoire de commande et, lorsque le nombre de traitements effectués est égal au nombre de boucles enregistré, on exécute les sauts dans la table de référence et dans la mémoire de commande correspondant aux adresses de reprise enregistrées dans la mémoire d'enchaînements et on passe à la ligne suivante de cette mémoire.

2. Procédé selon la revendication 1, selon lequel les troisièmes informations de structure contiennent des caractères spéciaux (1110, 1111) utilisés comme repères dans le fichier et de même nature que les autres informations contenues dans le fichier.

3. Procédé selon l'une quelconque des revendications 1 et 2, selon lequel les secondes informations de commande comportent des informations (fig. 9 : 19511, 19512) relatives aux opérations sur les résultats des opérations de rapprochement effectuées en parallèle sur les entités logiques de référence situées dans la zone horizontale de la table de référence correspondant à cette ligne de la mémoire de commande.

4. Procédé selon la revendication 3, selon lequel les secondes informations de commande comportent une information de commande (fig. 8 : 1950) relative au test à effectuer sur les résultats des opérations de rapprochement effectués, et, au cours du défilement du fichier, on commande la conservation ou l'effacement d'entités logiques issues du fichier et stockées en fonction d'un signal de commande produit en réponse à la lecture de ladite information de commande relative au test.

5. Dispositif pour la commande du rapprochement à effectuer entre des entités logiques de référence et des entités logiques issues d'un fichier, caractérisé en ce qu'il comporte :

(A) une table de référence (21) partagée en plusieurs colonnes verticales (210-213) et en plusieurs zones horizontales (A, B, C) dans lesquelles des entités logiques de référence de types différents sont rangées verticalement dans l'ordre dans lequel les suites formées chacune d'entités logiques de même type à rapprocher se présentent, non nécessairement de façon consécutive, dans le fichier, chaque zone horizontale contenant des entités logiques de référence de même type rangées verticalement par colonnes chacune formée par les éléments d'information successifs constitutifs d'une entité logique de référence ;

(B) des opérateurs (310, 311, 312, 313) ayant chacun une entrée recevant les entités logiques du fichier (S) et une autre entrée pouvant recevoir les éléments d'information contenus dans une colonne (210, 211, 212, 213) de la table (21) ;

(C) au moins une mémoire-tampon (51) pouvant recevoir des informations issues du fichier (S) ; et

(D) une unité de commande du traitement à effectuer sur les éléments d'information du fichier (S), l'unité de commande comprenant :

— une mémoire de commande (11) distincte de la table de référence et contenant, par ligne : des premières informations de commande (fig. 3 : 11240, 11241) qui comprennent, d'autre part, des informations de commande relatives au rapprochement à effectuer entre des entités logiques de même type du fichier et des entités logiques situées dans une zone horizontale de la table de référence correspondant à la ligne de la mémoire dans laquelle ces informations de commande de rapprochement sont enregistrées et, d'autre part, des informations de commande (fig. 4 : 1130, 1131, 1132) relatives au stockage d'entités logiques issues du fichier ; des secondes informations de commande qui comprennent des informations de commande (fig. 5-9 : 1910-19512) d'opérations à effectuer à la fin du ou des rapprochements et/ou des informations de stockage d'une ou plusieurs entités logiques du fichier, lesdites informations de commande d'opérations comportant des instructions de bouclage éventuelles pour commander les enchaînements dans la mémoire de commande et dans la table de référence ; et des troisièmes informations de structure (fig. 3 : 1110-1123) destinées à permettre la reconnaissance de la fin des entités logiques sur lesquelles doit être effectué le rapprochement et/ou le stockage commandé par des informations de commande de la ligne ;

— une mémoire d'enchaînements (fig. 11 : 0110) pour l'enregistrement, par ligne qui correspond à une ligne de la mémoire de commande, d'informations (01100) relatives au nombre de boucles à effectuer pour les traitements de la ligne correspondante de la mémoire de commande, et d'informations (01101, 01102) relatives aux adresses de reprise dans la table de référence et dans la mémoire de commande lorsque le nombre de boucles a été effectué ;

— un compteur (1110) pour compter les traitements effectués ; et

— un dispositif de comparaison (0111) pour comparer le contenu dudit compteur avec le nombre de boucles à effectuer, et

— un circuit de microcommande (10) qui est relié à la mémoire de commande (11) et au dispositif de comparaison (0111) et qui reçoit les informations issues du fichier (S) pour, au cours et sans interruption du défilement du fichier, délivrer des signaux de commande d'exécution des opérations correspondant aux premières informations de commande d'une ligne de la mémoire de commande, notamment la comparaison selon une première fonction de chaque entité logique à rapprocher en parallèle avec des entités logiques de référence contenues dans une zone horizontale de la table de référence, puis, après reconnaissance de la fin des entités logiques suivant les troisièmes informations de structure, l'exécution des opérations correspondant aux secondes informations de commande de cette ligne ; les passages d'une ligne à la suivante dans une zone horizontale de la table de référence étant effectués lorsque la ligne correspondante de la mémoire de commande contient une information de commande de rapprochement à effectuer avec la ou les entités logiques de référence contenues dans cette zone horizontale, et le cas échéant, en réponse aux instructions de bouclage (1910, 1911) contenus

**0.022 004**

dans une ligne de la mémoire de commande et aux informations (01100) enregistrées dans une ligne correspondante de la mémoire d'enchaînements, le comptage du nombre de traitements effectués correspondant à cette ligne de la mémoire de commande et, lorsque le nombre de traitements effectués est égal au nombre de boucles enregistré, l'exécution de sauts dans la table de référence et dans la mémoire de commande correspondant aux adresses de reprise enregistrées dans la mémoire d'enchaînements et passage à la ligne suivante de cette mémoire d'enchaînements.

6. Dispositif de commande selon la revendication 5, dans lequel un dispositif de combinaison horizontale (3500), prévu pour combiner les résultats desdits opérateurs selon un code de combinaison contenu dans les secondes informations de commande, est constitué de modules (3501-3504) connectés, aux sorties desdits opérateurs (310-313) chaque module comportant des premiers moyens pour valider les résultats de deux opérateurs (OR) lorsque lesdits signaux de code de combinaison ont une première valeur et les seconds moyens pour conditionner la validité d'un résultat transmis par l'autre, et réciproquement (AND), lorsque lesdits signaux de code de combinaison ont une seconde valeur.

## Claims

1. Method for controlling comparisons to be carried out between reference data elements and data elements proceeding from a file (S), said method consisting in :

(A) recording reference data elements in a reference table (21) comprising a plurality of vertical columns (210-213) and a plurality of horizontal zones (A, B, C), reference data elements of different types being stored vertically, in different horizontal zones of the reference table, in the order in which the sequences which are each made up of data elements of a same type to be compared, are received, not necessarily in consecutive manner, in the source file, each horizontal zone containing reference data elements of a same type stored in vertical columns, each of which is made up of successive items of information constituting a reference data element,

(B) storing items of control information in a control memory (11) separate from the reference table and containing, line by line :

— first items of information including, firstly, items of control information (Fig. 3 : 11240, 11241) relating to the comparison to be carried out between input data elements of the same type proceeding from the source file and data elements located in a horizontal zone of the reference table corresponding with the line in the control memory in which the said items of comparison control information are recorded, and secondly, items of control information (Fig. 4 : 1130, 1131, 1132) relating to the storage of input data elements proceeding from the source file,

— second items of control information comprising information (Figs. 5-9 : 1910-19512) for control of operations to be carried out at the end of the comparison or comparisons and/or storage information for storing one or more data elements from the file, said information for control of operations including any loop control information (Fig. 5 : 1910, 1911) for controlling the linkage of the processes in the control memory and in the reference table, and

— third items of structure information (Fig. 3 : 1110-1123) permitting the recognition of the end of the input data elements on which is to be carried out the comparison and/or the storage controlled by items of control information of the line,

(C) recording in a linkage memory (Fig. 11 : 0110) for every line which corresponds to a line of the control memory, firstly items of information relating to the number of loops to be effected for the processings of the corresponding line of the control memory and, secondly, items of information (01101, 01102) relating to the restart addresses in the reference table and in the control memory when the number of loops has been effected, and

(D) running the source file, and performing as the data elements are received without intermediate storage, the operations corresponding to the first items of control information of one line of the control memory particularly by comparing according to a first function, every input data element to be compared in parallel with reference input data elements contained in a horizontal zone of the reference table, then, after recognition of the end of the data elements following the third items of structure information, performing the operations corresponding to the second items of control information of said line, said operations being conducted during the time when the items of information are received whereas the source file is run,

— passages from one line to the next in a horizontal zone of the reference table being effected when the corresponding line of the control memory contains an item of control information relating to the comparison to be effected with the reference input data element or elements contained in said horizontal zone, and

— if necessary, in response to the linkage instructions (1910, 1911) contained in one line of the control memory and to the items of information (01100) recorded in a corresponding line of the linkage memory, counting the number of processings carried out and corresponding to said line of the control memory and, when said number of carried-out processings is equal to the recorded number of loops, performing the jumps in the reference table and in the control memory which correspond to the restart addresses recorded in the linkage memory, and passing to the next line of said memory.

# 0 022 004

2. Method according to claim 1, whereby the third items of structure information contain special characters (1110, 1111) used as reference marks in the source file and of the same type as the other items of information contained in the source file.

3. Method according to any one of claims 1 and 2, whereby the second items of control information contain items of information (Fig. 9 : 19511, 19512) relating to the operations on the results of the comparisons operations conducted in parallel on the reference input data elements situated in the horizontal zone of the reference table corresponding to said line of the control memory.

4. Method according to claim 3, whereby the second items of control information include an item of control information (Fig. 8 : 1950) relative to the test to be conducted on the completed comparison operations, and, while the source file is run, the saving or erasing of input data elements proceeding from said source file and stored as a function of a control signal produced in response to said item of control information relating to the test.

5. Device for the control of the comparison to be carried out between reference input data elements and input data elements proceeding from a source file, characterized in that it comprises :

(A) a reference table (21) divided into a plurality of vertical columns (210-213) and a plurality of horizontal zones (A, B, C) in which reference input data elements of different types are stored vertically following the order in which the sequences each formed of data elements of a same type to be compared appear, not necessarily consecutively, in the file, each horizontal zone containing reference data elements of a same type arranged vertically in columns each formed by the successive items of information constituting a reference data element ;

(B) computing units (310, 311, 312, 313) each one having an input receiving the data elements proceeding from the source file (S) and another input able to receive the items of information contained in a column (210, 211, 212, 213) of the table (21) ;

(C) at least one buffer-memory (51) able to receive data proceeding from the source file (S) ; and

(D) a control unit to control the processing of the items of information proceeding from the source file (S), said control unit comprising :

— a control memory (11) separate from the reference table for storing, line by line : first items of control information (Fig. 3 : 11240, 11241) comprising, on the one hand, items of control information relating to the comparison to be carried out between input data elements of the same type from the source file and input data elements situated in a horizontal zone of the reference table corresponding to that line of the memory in which the said items of comparison control information are recorded and, on the other hand, items of control information (Fig. 4 : 1130, 1131, 1132) relating to the storage of input data elements proceeding from the source file ; second items of control information comprising items of control information (Fig. 5-9 : 1910-19512) relating to operations to be carried out at the end of the comparison or comparisons and/or items of information to control the storage of one or more data elements from the source file, the said items of control information relating to operations, optionally containing linkage instructions for controlling linkages in the control memory and in the reference table ; and third items of structure information (Fig. 3 : 1110-1123) to enable recognition of the end of the input data elements on which the comparison is to be effected and/or the storage controlled by items of line control information ;

— a linkage memory (Fig. 11 : 0110) for the recording, line by line corresponding with a line of the control memory, of items of information (01100) relative to the number of loops to be effected for the processings of the corresponding line of the control memory, and items of information (01101, 01102) relating to the loading addresses in the reference table and in the control memory when the number of loops has been effected ;

— a counter (1110) for counting the completed processings ; and

— a comparator device (0111) for comparing the contents of said counter with the number of loops to be effected, and

— a microcontrol circuit (10) connected to the control memory (11) and to the comparator device (0111) and receiving the items of information proceeding uninterruptedly from the file (S) in order to deliver, throughout the advance of the file, signals for controlling the performance of the operations corresponding to the first items of control information of one line of the control memory, and in particular the comparison according to a first function of each data element to be compared in parallel with reference data elements contained in a horizontal zone of the reference table, then, after recognition of the end of the data elements according to the third items of structure information, the performance of the operations corresponding to the second items of control information of said line ; the passages from one line to the next in a horizontal zone of the reference table being effected when the corresponding line of the control memory contains an item of control information relating to a comparison to be effected with the reference data elements contained in said horizontal zone, and if necessary, in response to the looping instructions (1910, 1911) contained in one line of the control memory and in response to the items of information (01100) recorded in a corresponding line of the linkage memory ; the counting of the number of processings completed, corresponding to said line of the control memory ; and, when the number of completed processings is equal to the recorded number of loops, the jumps effected in the reference table and in the control memory corresponding to the loading addresses recorded in the linkage memory and passage to the next line of said linkage memory.

21

6. Control device according to claim 5, wherein a horizontal computing device (3500), provided for computing the results of said computing units according to a computing code contained in the second items of control information, is constituted of modules (3501-3504) connected to the outputs of said computing units (310-313) each module comprising first means for validating the results from the two computing units (OR) when said computing code signals have a first value, and second means for validating or not a result transmitted by the other, and inversely (AND) when said computing code signals have a second value.

**Patentansprüche**

1. Verfahren zur Vergleichssteuerung logischer Bezugseinheiten und logischer Einheiten einer Datei (S), wobei das Verfahren darin besteht, daß

(A) logische Bezugseinheiten in einer Bezugstabelle (21) mit mehreren vertikalen Spalten (210-213) und mehreren horizontalen Bereichen (A, B, C) gespeichert werden, indem logische Bezugseinheiten unterschiedlicher Typen vertikal, in unterschiedlichen horizontalen Bereichen der Bezugstabelle, jede von logischen zu vergleichenden Einheiten vom selben Typ in der Reihenfolge angeordnet werden, in der die gebildeten Folgen in der Datei auftreten, nicht notwendigerweise auf fortlaufende Weise, wobei jeder horizontale Bereich logische Bezugseinheiten vom selben Typ enthält, die vertikal in Spalten angeordnet sind, die jeweils durch aufeinanderfolgende Informationsbestandteile einer logischen Bezugseinheit gebildet sind,

(B) Steuerinformationen in einem Steuerspeicher (11) gespeichert werden, der von der Bezugstabelle verschieden ist und je Zeile enthält :
— erste Steuerinformationen, die einerseits Steuerinformationen (Fig. 3 : 11240, 11241) bezüglich des Vergleichs zwischen logischen Einheiten der Datei vom selben Typ und logischen Einheiten, die in einem horizontalen Bereich der Bezugstabelle liegen, der der Speicherzeile entspricht, in der diese Vergleichssteuerinformationen gespeichert sind, und andererseits Steuerinformationen (Fig. 4 : 1130, 1131, 1132) bezüglich der Speicherung logischer Einheiten der Datei umfassen,
— zweite Steuerinformationen, die Steuerinformationen (Fig. 5-9 : 1910-19512) von Operationen, die am Ende des oder der Vergleiche auszuführen sind und/oder Speicherungsinformationen einer oder mehrerer logischer Einheiten der Datei umfassen, wobei die Operationssteuerinformationen eventuelle Schleifenbildungsinstruktionen (Fig. 5 : 1910, 1911) zum Steuern der Verknüpfungen im Steuerspeicher und in der Bezugstabelle enthalten, und
— dritte Strukturinformationen (Fig. 3 : 1110-1123), die dazu bestimmt sind, das Erkennen des Endes logischer Einheiten zu gestatten, bei denen der Vergleich und/oder die durch die Steuerinformationen der Zeile gesteuerte Abspeicherung ausgeführt werden soll,

(C) in einem Verknüpfungsspeicher (Fig. 11 : 0110) je Zeile, die einer Zeile des Steuerspeichers entspricht, einerseits Informationen (01100) bezüglich der Zahl von Schleifen, die für die Verarbeitungen der entsprechenden Zeile des Steuerspeichers auszuführen sind, und andererseits Informationen (01101, 01102) bezüglich der Wiederanlaufadressen in der Bezugstabelle und im Steuerspeicher gespeichert werden, wenn die Schleifenzahl ausgeführt worden ist, und

(D) die Datei durchlaufen wird und im Flug, ohne Zwischenspeicherung, die den ersten Steuerinformationen einer Zeile des Steuerspeichers entsprechenden Operationen ausgeführt werden, insbesondere indem gemäß einer ersten Funktion jede logische Vergleichseinheit parallel zu in einem horizontalen Bereich der Bezugstabelle enthaltenen logischen Bezugseinheiten verglichen wird, dann, nach Erkennen des Endes der logischen Einheiten folgend dritten Strukturinformationen die Operationen ausgeführt werden, die den zweiten Steuerinformationen dieser Zeile entsprechen, wobei diese Operationen in der Zeit ausgeführt werden, während der die Informationselemente im Verlauf des Durchlaufs der Datei erhalten werden,
— wobei die Durchläufe von einer Zeile zur folgenden in einem horizontalen Bereich der Bezugstabelle ausgeführt werden, wenn die entsprechende Zeile des Steuerspeichers eine mit der oder den in diesem horizontalen Bereich enthaltenen logischen Bezugseinheiten auszuführende Vergleichssteuerinformation enthält, und
— gegebenenfalls als Antwort auf Schleifenbildungsinstruktionen (1910, 1911), die in einer Zeile des Steuerspeichers enthalten sind, und auf Informationen (01100), die in einer entsprechenden Zeile des Verknpüfungsspeichers gespeichert sind, die Anzahl von ausgeführten Verarbeitungen entsprechend dieser Zeile des Steuerspeichers gezählt wird und, wenn die Anzahl von ausgeführten Verarbeitungen gleich der gespeicherten Anzahl von Schleifen ist, die Sprünge in der Bezugstabelle und im Steuerspeicher entsprechend den im Verknüpfungsspeicher gespeicherten Wiederanlaufadressen ausgeführt werden und zur folgenden Zeile dieses Speichers übergegangen wird.

2. Verfahren nach Anspruch 1, bei dem die dritten Strukturinformationen Spezialzeichen (1110, 1111) enthalten, die in der Datei als Kennzeichnungen verwendet werden und von der selben Art wie die anderen, in der Datei enthaltenen Informationen sind.

3. Verfahren nach einem beliebigen der Ansprüche 1 und 2, bei dem die zweiten Steuerinformationen Informationen (Fig. 9 : 19511, 19512) bezüglich Operationen an den Ergebnissen der Vergleichsoperationen parallel zu den logischen Bezugseinheiten enthalten, die im horizontalen Bereich der Bezugstabelle entsprechend dieser Zeile des Steuerspeichers liegen.

4. Verfahren nach Anspruch 3, bei dem die zweiten Steuerinformationen eine Steuerinformation (Fig. 8 : 1950) bezüglich der an den Ergebnissen der Vergleichsoperationen auszuführenden Überprüfung aufweisen und im Verlauf des Durchlaufs der Datei die Erhaltung oder das Löschen von logischen Einheiten aus der Datei gesteuert wird, die in Abhängigkeit von einem auf das Lesen der Steuerinformation bezüglich der Überprüfung erzeugten Steuersignal gespeichert sind.

5. Vorrichtung zur Vergleichssteuerung logischer Bezugseinheiten und logischer Einheiten einer Datei, gekennzeichnet durch :

(A) eine Bezugstabelle (21), die in mehrere vertikale Spalten (210-213) und in mehrere horizontale Bereiche (A, B, C) aufgeteilt ist, in denen logische Bezugseinheiten unterschiedlicher Typen vertikal in der Reihenfolge angeordnet sind, in der die gebildeten Folgen jede von zu vergleichenden logischen Einheiten desselben Typs in der Datei auftreten, nicht notwendig in aufeinanderfolgender Weise, wobei jeder horizontale Bereich logische Bezugseinheiten vom selben Typ enthält, die vertikal in Spalten angeordnet sind, die jeweils durch aufeinanderfolgende Informationsbestandteile einer logischen Bezugseinheit gebildet sind ;

(B) Operatoren (310, 311, 312, 313), die jeweils einen die logischen Einheiten der Datei (S) aufnehmenden Eingang und einen anderen Eingang besitzen, der die Informationselemente aufnehmen kann, die in einer Spalte (210, 211, 212, 213) der Tabelle (21) enthalten sind ;

(C) zumindest einen Pufferspeicher (51), der Informationen aus der Datei (S) aufnehmen kann ; und

(D) eine Steuereinheit zur Verarbeitung der Informationselemente der Datei (S), wobei die Steuereinheit umfaßt :

— einen Steuerspeicher (11), der von der Bezugstabelle verschieden ist und je Zeile enthält : erste Steuerinformationen (Fig. 3 : 11240, 11241), die einerseits Steuerinformationen bezüglich des zwischen logischen Einheiten der Datei vom selben Typ und logischen Einheiten auszuführenden Vergleichs, die in einem horizontalen Bereich der Bezugstabelle entsprechend der Zeile des Speichers liegen, in der diese Vergleichssteuerinformationen gespeichert sind, und andererseits Steuerinformationen (Fig. 4 : 1130, 1131, 1132) bezüglich der Speicherung logischer Einheiten aus der Datei enthalten ; zweite Steuerinformationen, die Steuerinformationen (Fig. 5-9 : 1910-19512) von am Ende des oder der Vergleiche auszuführenden Operationen und/oder Speicherungsinformationen einer oder mehrerer logischer Einheiten der Datei umfassen, wobei die Operationssteuerinformationen eventuelle Schleifenbildungs instruktionen zur Steuerung der Verknüpfungen in dem Steuerspeicher und in der Bezugstabelle enthalten ; und dritte Strukturinformationen (Fig. 3 : 1110-1123), die dazu bestimmt sind, das Erkennen des Endes logischer Einheiten zu gestatten, bei denen der Vergleich und/oder die Speicherung gesteuert durch Steuerinformationen der Zeile ausgeführt werden soll ;

— einen Verknüpfungsspeicher (Fig. 11 : 0110) zur Speicherung von Informationen (01100) bezüglich der Anzahl auszuführender Schleifen für die Verarbeitungen der entsprechenden Zeile des Steuerspeichers je Zeile, die einer Zeile des Steuerspeichers entspricht, und von Informationen (01101, 01102) bezüglich der Wiederanlaufadressen in der Bezugstabelle und im Steuerspeicher, wenn die Schleifenanzahl ausgeführt worden ist ;

— einen Zähler (1110) zum Zählen der ausgeführten Verarbeitungen und

— eine Vergleichsvorrichtung (0111) zum Vergleichen des Inhalts des Zählers mit der Anzahl auszuführender Schleifen und

— eine Mikrosteuerschaltung (10), die mit dem Steuerspeicher (11) und mit der Vergleichsvorrichtung (0111) verbunden ist und die die Informationen aus der Datei (S) aufnimmt, um im Verlauf und ohne Unterbrechung des Durchlaufs der Datei Steuersignale zur Ausführung der Operationen entsprechend den ersten Steuerinformationen einer Zeile des Steuerspeichers auszugeben, insbesondere für den Vergleich gemäß einer ersten Funktion jeder logischen Vergleichseinheit parallel zu logischen Bezugseinheiten, die in einem horizontalen Bereich der Bezugstabelle enthalten sind, dann, nach Erkennen des Endes der logischen Einheiten folgend den dritten Strukturinformationen, für die Ausführung von Operationen entsprechend den zweiten Steuerinformationen dieser Zeile ; für die Übergänge von einer Zeile zur folgenden in einem horizontalen Bereich der Bezugstabelle, die ausgeführt werden, wenn die entsprechende Zeile des Steuerspeichers eine Vergleichssteuerinformation enthält, die bei der oder den in diesem horizontalen Bereich enthaltenen logischen Bezugseinheiten auszuführen ist, und gegebenenfalls auf in einer Zeile des Steuerspeichers enthaltene Schleifenbildungsinstruktionen (1910, 1911) und auf in einer entsprechenden Zeile des Verknüfungsspeichers gespeicherte Informationen (01100) hin für die Zählung der Anzahl ausgeführter Verarbeitungen entsprechend dieser Zeile des Steuerspeichers und, wenn die Anzahl der ausgeführten Verarbeitungen gleich der gespeicherten Schleifenanzahl ist, für die Ausführung von Sprüngen in der Bezugstabelle und im Steuerspeicher entsprechend den im Verknüpfungsspeicher gespeicherten Wiederanlaufadressen und den Übergang zur folgenden Zeile dieses Verknüpfungsspeichers.

6. Steuervorrichtung nach Anspruch 5, in der eine Vorrichtung zur horizontalen Verknüpfung (3500), die vorgesehen ist, um die Ergebnisse der Operatoren gemäß einem in den zweiten Steuerinformationen enthaltenen Verknüpfungscode zu verknüpfen, aus Moduln (3501-3504) gebildet ist, die mit den Ausgängen der Operatoren (310-313) verbunden sind, wobei jedes Modul erste Mittel zum Gültigmachen der Ergebnisse von zwei Operatoren (OR), wenn die Verknüpfungscodesignale einen ersten Wert besitzen, und die zweiten Mittel aufweist, um die Gültigkeit eines durch das andere übertragenen Ergebnisses zu bedingen und wechselseitig (UND), wenn die Verknüpfungscodesignale einen zweiten Wert besitzen.

Fig. 1

0 022 004

Fig. 2

Fig. 3

Fig. 4

Fig. 5

Fig. 6

Fig. 7

Fig. 8

0 022 004

0 022 004

Fig. 5

Fig. 10

Fig. 11